(19) Europäisches Patentamt
European Patent Office
Office européen des brevets

(11) **EP 4 748 263 A1**

(12) **EUROPEAN PATENT APPLICATION**
published in accordance with Art. 153(4) EPC

(43) Date of publication:
**27.05.2026 Bulletin 2026/22**

(21) Application number: **24842816.1**

(22) Date of filing: **20.05.2024**

(51) International Patent Classification (IPC):
*A43B 13/12* (2006.01)    *C08K 3/013* (2018.01)
*C08K 3/36* (2006.01)    *C08K 9/00* (2006.01)
*C08K 9/06* (2006.01)    *C08L 21/00* (2006.01)
*C08L 91/00* (2006.01)    *C08L 101/00* (2006.01)

(52) Cooperative Patent Classification (CPC):
A43B 13/12; C08K 3/013; C08K 3/36; C08K 9/00;
C08K 9/06; C08L 21/00; C08L 91/00; C08L 101/00

(86) International application number:
**PCT/JP2024/018565**

(87) International publication number:
**WO 2025/018020 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.07.2023 JP 2023116818**

(71) Applicant: **Japan Elastomer Co., Ltd.
Tokyo 100-0006 (JP)**

(72) Inventors:
• **HAYAMA, Tsuyoshi
Tokyo 100-0006 (JP)**
• **YASUMOTO, Atsushi
Tokyo 100-0006 (JP)**
• **TANIGUCHI, Naoki
Tokyo 100-0006 (JP)**

(74) Representative: **Strehl & Partner mbB
Maximilianstrasse 54
80538 München (DE)**

(54) **RUBBER COMPOSITION FOR OUTSOLE AND OUTSOLE**

(57) A rubber composition for an outsole, containing rubber, a filler, and a tackifier.

EP 4 748 263 A1

## Description

### Technical Field

The present invention relates to a rubber composition for an outsole, and an outsole.

### Background Art

Conventionally, one of the important properties of outsoles of shoes is grip properties, and further improvement thereof is required. To date, techniques for outsoles in which grip properties are attempted to be improved have been disclosed.

For example, Patent Document 1 discloses a technique for a rubber composition and an outsole in which the viscoelastic property tan$\delta$ is improved by defining the composition ratio of a formulation and using a predetermined silane coupling agent, thereby improving grip properties.

Patent Document 2 discloses a technique for a rubber composition and an outsole in which grip properties are improved by using a terminal-modified group-containing cyclic olefin ring-opening polymer and defining the glass transition temperature.

### Citation List

### Patent Document

Patent Document 1: Japanese Patent Application No. 2017-549835

Patent Document 2: Japanese Patent Application No. 2015-72532

### Summary of Invention

### Technical Problem

However, in the rubber compositions described in Patent Documents 1 and 2, there is room for improvement in the application to the outsole of sports shoes and the like that are required to have further excellent grip properties, which is problematic.

The present inventor has examined the properties of the materials contributing to the grip properties of shoes, and found that the adhesive force of a surface in contact with the ground is important. On the other hand, when the amount of a plasticizer such as oil to be added to the rubber composition is increased to enhance the adhesiveness, the reduction in the wear resistance and strength of the rubber composition is high, so that the durability of the outsole deteriorates, which is problematic.

Therefore, in view of the aforementioned problems in the conventional art, an object of the present invention is to provide a rubber composition for an outsole from which an outsole having practically favorable strength and wear resistance and excellent grip properties can be obtained.

### Solution to Problem

The present inventors have intensively studied to solve the aforementioned problems in the conventional art, and found that a rubber composition for an outsole from which an outsole having improved adhesive force can be obtained can be provided without reducing wear resistance and strength by formulating a tackifier in a rubber composition containing rubber and a filler, thereby completing the present invention.

That is, the present invention is as follows.

[1] A rubber composition for an outsole, comprising:

rubber;

a filler; and

a tackifier.

[2] The rubber composition for the outsole according to [1], wherein the rubber composition contains a conjugated diene polymer as the rubber.

[3] The rubber composition for the outsole according to [2], wherein the conjugated diene polymer contains an aromatic vinyl monomer unit and a conjugated diene monomer unit.

[4] The rubber composition for the outsole according to [3], wherein the conjugated diene polymer has a content of the aromatic vinyl monomer unit of 10% by mass or more and 60% by mass or less and an amount of vinyl bonds of 20% or more and 70% or less.

[5] The rubber composition for the outsole according to [3] or [4], wherein the conjugated diene polymer has a content of an aromatic vinyl monomer block of 5% by mass or less.

[6] The rubber composition for the outsole according to any one of [1] to [5], wherein a content of the filler is 15 parts by mass or more and 60 parts by mass or less based on 100 parts by mass of the rubber.

[7] The rubber composition for the outsole according to any one of [1] to [6], wherein the rubber composition contains 80% by mass or more of silica based on the total mass of the filler.

[8] The rubber composition for the outsole according to any one of [1] to [7], wherein a softening point of the tackifier is 40 to 170°C.

[9] The rubber composition for the outsole according to any one of [1] to [8], wherein a glass transition temperature of the tackifier is -20°C or more.

[10] The rubber composition for the outsole according to any one of [1] to [9], wherein the tackifier is a terpene compound and/or a petroleum hydrocarbon compound.

[11] The rubber composition for the outsole according to any one of [1] to [10], wherein a b* value of the tackifier is 50 or less.

[12] The rubber composition for the outsole according to [10] or [11], wherein the petroleum hydrocarbon compound is an aromatic petroleum hydrocarbon resin or alkylphenol.

[13] The rubber composition for the outsole according to any one of [1] to [12], wherein a mixture of the rubber and the tackifier has only one Tg in differential scanning calorimetry (DSC).

[14] The rubber composition for the outsole according to any one of [2] to [13], wherein the tackifier is a terpene compound, and the conjugated diene polymer has a content of an aromatic vinyl monomer unit of 10% by mass or more and 50% by mass or less and an amount of vinyl bonds of 24% or more and 60% or less.

[15] The rubber composition for the outsole according to any one of [2] to [14], wherein the tackifier is a petroleum hydrocarbon compound, and the conjugated diene polymer has a content of an aromatic vinyl monomer unit of 20% by mass or more and 60% by mass or less and an amount of vinyl bonds of 20% or more and 55% or less.

[16] The rubber composition for the outsole according to any one of [1] to [15], wherein a difference in glass transition temperatures between the rubber and the tackifier is 10°C or more and 180°C or less.

[17] The rubber composition for the outsole according to any one of [1] to [16], wherein a content of the tackifier in the rubber composition for an outsole is 1 part by mass or more and 30 parts by mass or less based on 100 parts by mass of the rubber.

[18] The rubber composition for the outsole according to any one of [1] to [17], wherein a HAZE is 50% or less.

[19] The rubber composition for the outsole according to any one of [1] to [18], wherein the rubber composition contains, in the rubber, 10% by mass or more and less than 60% by mass of nitrile rubber as the rubber.

[20] The rubber composition for the outsole according to any one of [1] to [19], wherein the rubber composition contains, in the rubber, 10% by mass or more and 90% by mass or less of epichlorohydrin rubber as the rubber.

[21] The rubber composition for the outsole according to any one of [1] to [20], wherein the rubber composition contains, in the rubber, 10% by mass or more and 90% by mass or less of urethane rubber as the rubber.

[22] The rubber composition for the outsole according to any one of [1] to [21], wherein the rubber composition contains, in the rubber, 10% by mass or more and 90% by mass or less of chlorosulfonated ethylene rubber as the rubber.

[23] The rubber composition for the outsole according to any one of [1] to [22], wherein the rubber composition contains, in the rubber, 10% by mass or more and 90% by mass or less of acrylic rubber as the rubber.

[24] The rubber composition for the outsole according to any one of [1] to [23], wherein the rubber composition contains, in the rubber, 10% by mass or more and 90% by mass or less of silicone rubber as the rubber.

[25] The rubber composition for the outsole according to any one of [1] to [24], wherein the rubber composition contains, in the rubber, 10% by mass or more and 90% by mass or less of fluorine rubber as the rubber.

[26] The rubber composition for the outsole according to any one of [2] to [25], wherein the conjugated diene polymer contains polybutadiene and a styrene-butadiene copolymer.

[27] An outsole as a molded body of the rubber composition for the outsole according to any one of [1] to [26].

**Advantageous Effects of Invention**

The present invention can provide a rubber composition for an outsole and outsole having practically favorable strength and wear resistance and excellent grip properties.

**Description of Embodiments**

Hereinafter, the embodiment for implementing the invention (hereinafter, referred to as "the present embodiment") will be described in detail.
The following embodiments are merely examples for explaining the present invention, and the present invention is not limited to the following embodiments. The present invention can be appropriately modified and implemented within the range of the gist of the present invention.

[Rubber Composition for Outsole]

The rubber composition for an outsole of the present embodiment contains rubber, a filler, and a tackifier.
The outsole as used herein is a member used for a part of a shoe in contact with the ground.
The outsole is designed so as to exert adhesive force, that is, the force that makes the outsole adsorb on the floor surface and hold the floor, when the outsole is brought into contact with the floor surface, so that the outsole hardly slips and excellent grip properties can be obtained.
By using the rubber composition for an outsole of the present embodiment, adhesive force can be improved in use as an outsole, without adding a plasticizer, so that the outsole has practically favorable strength and wear resistance, and can obtain excellent grip properties.
Even when the method for improving the grip properties of a tire is applied to the outsole to obtain excellent grip properties in the outsole, sufficient grip properties may not be obtained in the outsole. This is considered due that the mechanism of expressing grip properties is different between the tire and the outsole. The energy loss due to the deformation of the tire is considered to significantly influence on the expression of grip properties in the tire, and the improvement of $\tan\delta$ (0°C, 106 Hz) in the viscoelasticity measurement is important. Whereas, the improvement of adhesive force is important in the outsole.

(Rubber)

The rubber composition for an outsole of the present embodiment contains rubber, from the viewpoint of the balance between wear resistance and grip properties.

Any of natural rubber or synthetic rubber may be used as the rubber.

Examples of synthetic rubber include, but are not limited to, polybutadiene rubber (BR), polyisoprene rubber (IR), styrene-butadiene rubber (SBR), hydrogenated styrene-butadiene rubber (HSBR), nitrile rubber (NBR), hydrogenated nitrile rubber (HNBR), chloroprene rubber, butyl rubber (IIR) as well as a bromide and chloride thereof, ethylene-propylene-diene rubber (EPDM), epichlorohydrin rubber (ECO), urethane rubber (U), chlorosulfonated polyethylene (CSM), acrylic rubber (ACM), silicone rubber (Q), and fluorine rubber (FKM), and thermoplastic elastomers and thermosetting elastomers are also included therein.

The rubber contained in the rubber composition for an outsole of the present embodiment may be used alone, or two or more rubbers may be used in combination.

The content of the rubber in the rubber composition for an outsole of the present embodiment is preferably 10% by mass or more, more preferably 20% by mass or more, and still more preferably 30% by mass or more, from the viewpoint of elasticity and flexibility. On the other hand, from the viewpoint of costs and processability, the content is preferably 90% by mass or less, more preferably 85% by mass or less, and still more preferably 80% by mass or less.

The rubber contained in the rubber composition for an outsole of the present embodiment preferably contains at least one selected from the group consisting of polybutadiene rubber (BR), polyisoprene rubber (IR), styrene-butadiene rubber (SBR), acrylonitrile-butadiene rubber (NBR), chloroprene rubber, butyl rubber (IIR) as well as a bromide (BIIR) and chloride (CIIR) thereof, and ethylene-propylene-diene rubber (EPDM), from the viewpoint of the balance between wear resistance and grip properties, costs, and supply stability, and more preferably contains a conjugated diene polymer containing the conjugated diene monomer unit described below, particularly from the viewpoint of easy crosslinking.

(Conjugated Diene Polymer)

The rubber composition for an outsole of the present embodiment preferably contains a conjugated diene polymer as the rubber.

The content of the conjugated diene polymer based on the whole rubber is preferably 10% by mass or more, more preferably 15% by mass or more, and still more preferably 20% by mass or more, from the viewpoint of the wear resistance of the outsole. On the other hand, from the viewpoint of the oil resistance of the outsole of the present embodiment, the content is preferably 100% by mass or less, more preferably 70% by mass or less, and still more preferably 60% by mass or less.

The conjugated diene polymer contains at least a structural unit derived from a conjugated diene compound (hereinafter, also referred to as the "conjugated diene monomer unit").

Examples of the conjugated diene compound include, but are not limited to, 1,3-butadiene, isoprene, 2,3-dimethyl-1,3-butadiene, 1,3-pentadiene, 3-methyl-1,3-pentadiene, 1,3-hexadiene, and 1,3-heptadiene.

Among them, 1,3-butadiene and isoprene are preferable, and 1,3-butadiene is more preferable, from the viewpoint of easy availability on an industrial scale.

The conjugated diene polymer is preferably a copolymer of an aromatic vinyl compound and a conjugated diene compound, from the viewpoint of favorable wrapping properties with respect to the roll that is used in kneading of a crosslinking agent into the composition for an outsole, and the like.

That is, the conjugated diene polymer preferably contains a structural unit derived from an aromatic vinyl compound (hereinafter, also referred to as the "aromatic vinyl monomer unit").

Examples of the aromatic vinyl compound include, but are not limited to, styrene, p-methylstyrene, $\alpha$-methyl-styrene, vinyl ethylbenzene, vinyl xylene, vinyl naphthalene, and diphenylethylene.

Among them, styrene is preferable, from the viewpoint of easy availability on an industrial scale.

The conjugated diene polymer may be a polymer containing only the conjugated diene monomer unit, or may be a copolymer having the conjugated diene monomer unit and the aromatic vinyl monomer unit. To enhance the processability and the reproducibility of the physical properties of the rubber composition, the content of other constituent components other than the conjugated diene monomer unit and the aromatic vinyl monomer unit are preferably as low as possible.

From the viewpoint of the elasticity of the rubber composition for an outsole of the present embodiment, the total content of the conjugated diene monomer unit and the aromatic vinyl monomer unit in the conjugated diene polymer is preferably 90% by mass or more, more preferably 95% by mass or more, still more preferably 98% by mass or more, and even more preferably 100% by mass.

When the conjugated diene polymer is a copolymer of a conjugated diene compound and an aromatic vinyl compound, a microstructure, for example, the content of the aromatic vinyl monomer unit and the amount of 1,2-vinyl bonds are preferably controlled.

The content of the aromatic vinyl monomer unit in the conjugated diene polymer is preferably 10% by mass or more, more preferably 15% by mass or more, and still more preferably 20% by mass or more, from the viewpoint of the strength and hardness of the rubber composition for an outsole of the present embodiment. When the composition is used in an outsole having high transparency, the content is preferably 40% by mass or more, more preferably 41% by mass or more, and still more preferably 42% by mass or more. From the viewpoint of the moldability and crushability of the bale of the conjugated diene polymer, the content is preferably 63% by mass or less, preferably 60% by mass or less, more preferably 58% by mass or less, still more preferably 55% by mass or less, and even more preferably 50% by mass or less.

The content of the aromatic vinyl monomer unit can be controlled to the aforementioned numerical value range by adjusting the amount of the aromatic vinyl compound to be added upon polymerization.

The amount of 1,2-vinyl bonds refers to the mole fraction of the amount of 1,2-vinyl bonds based on the content of the conjugated diene monomer unit, and is preferably 18% or more, more preferably 20% or more, still more preferably 22% or more, and even more preferably 24% or more, from the viewpoint of the processability, crosslinkability, and flexibility of the rubber composition for an outsole of the present embodiment.

On the other hand, from the viewpoint of the easy polymerization and difficulty in gelation of the conjugated diene polymer, the amount of 1,2-vinyl bonds is preferably 70% or less, more preferably 65% or less, still more preferably 63% or less, and even more preferably 60% or less.

The amount of 1,2-vinyl bonds can be controlled to the aforementioned numerical value range by adjusting the reaction initiation temperature, reaction terminate temperature, and kind and amount of polar material to be added upon polymerization of the conjugated diene polymer.

The content of the aromatic vinyl monomer unit and amount of 1,2-vinyl bonds in the conjugated diene polymer can be measured by the methods described in Examples described below.

The conjugated diene polymer may contain an aromatic vinyl monomer block. When the conjugated diene polymer contains an aromatic vinyl monomer block, the content of the aromatic vinyl monomer block based on the conjugated diene polymer is preferably 5% by mass or less, more preferably 4% by mass or less, and still more preferably 3% by mass or less, from the viewpoint of the wear resistance of the rubber composition for an outsole of the present embodiment. On the other hand, from the viewpoint of the polymerization stability of the conjugated diene polymer, the content is preferably 0.5% by mass or more, more preferably 0.8% by mass or more, and still more preferably 1.15% by mass or more.

The content of the aromatic vinyl monomer block in the conjugated diene polymer can be measured by a known method in which the copolymer is decomposed by the method of Kolthoff (osmium tetroxide decomposition method described in I. M. Kolthoff, et al., J. Polym. Sci. 1, 429 (1946)) and the amount of the styrene block insoluble in methanol is analyzed.

The content of the aromatic vinyl monomer block can be controlled to the aforementioned numerical value range by adjusting the amount of the aromatic vinyl compound to be added and the timing of addition upon polymerization.

The conjugated diene polymer contained in the rubber composition for an outsole of the present embodiment may be hydrogenated. The method for hydrogenating the conjugated diene polymer is not particularly limited, and for example, the method described in International Publication No. WO 2021/206068 may be used.

<Content of copolymer of conjugated diene compound and aromatic vinyl compound>

As the rubber constituting the rubber composition for an outsole of the present embodiment, the conjugated diene polymer may be used alone or in combination of two or more.

When at least one of the conjugated diene polymers is the copolymer of the conjugated diene compound and the aromatic vinyl compound, the content of the copolymer of the conjugated diene compound and the aromatic vinyl compound is preferably 20% by mass or more, more preferably 40% by mass or more, and still more preferably 60% by mass or more based on the whole rubber, from the viewpoint of the grip properties of the rubber composition for an outsole of the present embodiment. From the viewpoint of the transparency of the rubber composition for an outsole of the present embodiment, the content is preferably 10% by mass or more, more preferably 15% by mass or more, and still more preferably 20% by mass or more based on the whole rubber. Further, from the viewpoint of the transparency, the content is preferably 60% by mass or less, more preferably 50% by mass or less, and still more preferably 40% by mass or less based on the whole rubber.

<Molecular Weight of Conjugated Diene Polymer>

In the conjugated diene polymer, the weight average molecular weight is preferably 150,000 or more, and more preferably 200,000 or more, from the viewpoint of the shape stability of the rubber composition for an outsole of the present embodiment and the tensile strength and wear resistance of a crosslinked body using the rubber composition for an outsole. On the other hand, from the viewpoint of the processability of the rubber composition for an outsole of the present embodiment, the weight average molecular weight is preferably 1,000,000 or less, more preferably 500,000 or less, and still more preferably 400,000 or less.

The molecular weight distribution (= weight average molecular weight/number average molecular weight) of the conjugated diene polymer is preferably 2.0 or less, more preferably 1.8 or less, and still more preferably 1.6 or less, from the viewpoint of the tensile strength of the rubber composition for an outsole of the present embodiment. On the other hand, from the viewpoint of the processability of the rubber composition for an outsole of the present embodiment, the molecular weight distribution of the conjugated diene polymer is preferably 1.05 or more, more preferably 1.10 or more, and still more preferably 1.20 or more.

The weight average molecular weight and the molecular weight distribution can be calculated from the molecular weight in terms of polystyrene measured by gel permeation chromatography (GPC).

<Mooney viscosity of conjugated diene polymer>

The Mooney viscosity of the conjugated diene polymer is preferably 120 or less, more preferably 90 or less, and still more preferably 60 or less, from the viewpoint of the processability of the rubber composition for an outsole of the present embodiment. On the other hand, from the viewpoint of the wear resistance of the rubber composition for an outsole of the present embodiment, the Mooney viscosity is preferably 30 or more, more preferably 40 or more, and still more preferably 45 or more.

<Coupling Conjugated Diene Polymer>

The conjugated diene polymer as the rubber used in the rubber composition for an outsole of the present embodiment may be a coupling conjugated diene polymer obtained by subjecting an active terminal of a conjugated diene polymer obtained through a polymerization step to a coupling reaction using a bifunctional or higher reactive compound (hereinafter, also referred to as the "coupling agent").

Examples of the coupling agent include, but are not limited to, a coupling agent having at least one or more functional groups selected from functional groups such as an epoxy group, a carbonyl group, a carboxylic acid ester group, a carboxylic acid amid group, an acid anhydride group, a phosphoric acid ester group, a phosphite ester group, an epithio group, a thiocarbonyl group, a thiocarboxylic acid ester group, a dithiocarboxylic acid ester group, a thiocarboxylic acid amid group, an imino group, an ethyleneimino group, a halogen group, an alkoxysilyl group, an isocyanate group, a thioisocyanate group, a conjugated diene group, and an arylvinyl group.

Examples of the coupling agent include, but are not limited to, halogenated silane compounds such as silicon tetrachloride, silicon tetrabromide, silicon tetraiodide, monomethyl trichlorosilicon, monoethyl trichlorosilicon, monobutyl trichlorosilicon, monohexyl trichlorosilicon, monomethyl tribromosilicon, and bistrichlorosilylethane; and alkoxyhalogenated silane compounds such as monochlorotrimethoxysilane, monobromotrimethoxysilane, dichlorodimethoxysilane, dibromodimethoxysilane, trichloromethoxysilane, and tribromomethoxysilane.

In addition, examples of the coupling agent include, but are not limited to, alkoxysilane compounds such as tetramethoxysilane, tetraethoxysilane, tetrabutoxysilane, and alkyltriphenoxysilane.

Further, the coupling agent may be a nitrogen-containing compound, and examples thereof include, but are not limited to, isocyanate compounds, isothiocyanate compounds, isocyanuric acid derivatives, nitrogen group-containing carbonyl compounds, nitrogen group-containing vinyl compounds, and nitrogen group-containing epoxy compounds (hereinafter, such a nitrogen-containing compound as the coupling agent may be referred to as the coupling nitrogen-containing compound).

Preferred examples of the coupling nitrogen-containing compound include compounds having a nitrogen atom-containing functional group, and preferred examples of the nitrogen atom-containing functional group include an amine compound having no active hydrogen, such as a tertiary amine compound, a protected amine compound in which the above active hydrogen is substituted with a protective group, an imine compound represented by the general formula -N=C, and an alkoxysilane compound bonded to the nitrogen atom-containing functional group.

Examples of the coupling nitrogen-containing compound include, but are not limited to, compounds having an imino group and an alkoxysilyl group, such as tristrimethoxysilylpropylamine, triethoxysilylpropylamine, N-(1,3-dimethylbutylidene)-3-(triethoxysilyl)-1-propaneamine, N-(1,3-dimethylbutylidene)-3-(tributoxysilyl)-1-propaneamine, N-(1-methylpropylidene)-3-(triethoxysilyl)-1-propaneamine, N-ethylidene-3-(triethoxysilyl)-1-propaneamine, and N-(3-triethoxysilylpropyl)-4,5-dihydroimidazole; tetraglycidylmethaxylenediamine, tetraglycidylaminodiphenylmethane, tetraglycidyl-p-phenylenediamine, diglycidylaminomethylcyclohexane, and tetraglycidyl-1,3-bisaminomethylcyclohexane.

In addition, examples of the coupling nitrogen-containing compound include, but are not limited to, isocyanate compounds such as 2,4-tolylene diisocyanate, 2,6-tolylene diisocyanate, diphenylmethane diisocyanate, diphenylethane diisocyanate, and 1,3,5-benzene triisocyanate.

Further, examples of the coupling nitrogen-containing compound include, but are not limited to, 3-(4-methylpiperazin-1-yl)propyltriethoxysilane, 1-[3-(diethoxyethylsilyl)propyl]-4-methylpiperazine, 1-[3-(trimethoxysilyl)propyl]-3-methylimidazolidine, 1-[3-(diethoxysilyl)propyl]-3-ethylimidazolidine, 1-[3-(triethoxysilyl)propyl]-3-methylhexahydropyrimidine, 1-[3-(dimethoxymethylsilyl)propyl]-3-methylhexahydropyrimidine, 3-[3-(tributoxysilyl)propyl]-1-methyl-1,2,3,4-tetrahydropyrimidine, 3-[3-(dimethoxymethylsilyl)propyl]-1-ethyl-1,2,3,4-tetrahydropyrimidine, 1-(2-ethoxyethyl)-3-[3-(trimethoxysilyl)propyl]imidazolidine, (2-{3-[3-(trimethylsilyl)propyl]tetrahydropyrimidin-yl}ethyl)dimethylamine, 1-[3-(triethoxysilyl)propyl]-4-(trimethylsilyl)piperazine, 1-[3-(dimethoxymethylsilyl)propyl]-4-(trimethylsilyl)piperazine, 1-[3-(tributoxysilyl)propyl]-4-(trimethylsilyl)piperazine, 1-[3-(diethoxyethylsilyl)propyl]-3-(triethylsilyl)imidazolidine, 2-(trimethoxysilanyl)-1,3-dimethylimidazolidine, 1-[3-(triethoxysilyl)propyl]-3-(trimethylsilyl)imidazolidine, 1-[3-(dimethoxymethylsilyl)propyl]-3-(trimethylsilyl)hexahydropyrimidine, 1-[3-(triethoxysilyl)propyl]-3-(trimethylsilyl)hexahydropyrimidine, and 1-[4-(triethoxysilyl)propyl]-4-(trimethylsilyl)piperazine.

Further, examples of the coupling nitrogen-containing compound include, but are not limited to, 2-[3-(trimethoxysilyl)propyl]-1,3-dimethylimidazolidine, 2-[3-(trimethoxysilyl)propyl]-1,3-(bistrimethylsilyl)imidazolidine, 2-(diethoxydiethylsilyl)-1,3-diethylimidazolidine, 2-(triethoxysilyl)-1,4-diethylpiperazine, 2-(dimethoxymethylsilyl)-1,4-dimethylpiperazine, 5-(triethoxysilyl)-1,3-dipropylhexahydropyrimidine, 5-(diethoxyethylsilyl)-1,3-diethylhexahydropyrimidine, {2-[3-(2-dimethylaminoethyl)-2-(ethyldimethoxysilyl)-imidazolidin-1-yl]-ethyl}-dimethylamine, 5-(trimethoxysilyl)-1,3-bis-(2-methoxyethyl)-hexahydropyrimidine, 5-(ethyldimethoxysilyl)-1,3-bis-(2-trimethylsilylethyl)-hexahydropyrimidinyl-1,3-dimethylimidazolidine, 2-(3-diethoxyethylsilyl-propyl)-1,3-diethylimidazolidine, 2-(3-triethoxysilyl-propyl)-1,4-diethylpiperazine, 2-(3-dimethoxymethylsilyl-propyl)-1,4-dimethylpiperazine, 5-(3-triethoxysilyl-propyl)-1,3-dipropylhexahydropyrimidine, 5-(3-diethoxyethylsilyl-propyl)-1,3-diethylhexahydropyrimidine, {2-[3-(2-dimethylaminoethyl)-2-(3-ethyldimethoxysilyl-propyl)-imidazolidin-1-yl]-ethyl}-dimethylamine, 5-(3-trimethoxysilyl-propyl)-1,3-bis-(2-methoxyethyl)-hexahydropyrimidine, 5-(3-ethyldimethoxysilyl-propyl)-1,3-bis-(2-trimethylsilylethyl)-hexahydropyrimidine, 2-[3-(trimethoxysilyl)propyl]-1,3-bis(trimethylsilyl)imidazolidine, 2-(diethoxyethylsilyl)-1,3-bis(triethylsilyl)imidazolidine, 2-(triethoxysilyl)-1,4-bis(trimethylsilyl)piperazine, 2-(dimethoxymethylsilyl)-1,4-bis(trimethylsilyl)piperazine, and 5-(triethoxysilyl)-1,3-bis(tripropylsilyl)hexahydropyrimidine.

Further, examples of the coupling nitrogen-containing compound include, but are not limited to, [3-(1-hexamethyleneimino)propyl]triethoxysilane, [3-(1-hexamethyleneimino)propyl]trimethoxysilane, [2-(1-hexamethyleneimino)ethyl]triethoxysilane, [2-(1-hexamethyleneimino)ethyl]trimethoxysilane, [3-(1-pyrrolidinyl)propyl]triethoxysilane, [3-(1-pyrrolidinyl)propyl]trimethoxysilane, [3-(1-heptamethyleneimino)propyl]triethoxysilane, [3-(1-dodecamethylene imino) propyl]triethoxysilane, [3-(1-hexamethyleneimino)propyl]diethoxymethylsilane, [3-(1-hexamethyleneimino)propyl] diethoxyethylsilane, N-[3-(triethoxysilyl)-propyl]-N,N'-diethyl-N'-trimethylsilyl-ethane-1,2-diamine, N-[2-(trimethoxysilanyl)-ethyl]-N,N',N'-trimethylethane-1,2-diamine, and N,N-bis(trimethylsilyl)aminopropylmethyldiethoxysilane.

Further, examples of the coupling nitrogen-containing compound include, but are not limited to, 2,2-dimethoxy-1-(3-trimethoxysilylpropyl)-1-aza-2-silacyclopentane, 2,2-diethoxy-1-(3-triethoxysilylpropyl)-1-aza-2-silacyclopentane, 2,2-dimethoxy-1-(4-trimethoxysilylbutyl)-1-aza-2-silacyclohexane, 2,2-dimethoxy-1-(5-trimethoxysilylpentyl)-1-aza-2-silacycloheptane, 2,2-dimethoxy-1-(3-dimethoxymethylsilylpropyl)-1-aza-2-silacyclopentane, 2,2-diethoxy-1-(3-diethoxyethylsilylpropyl)-1-aza-2-silacyclopentane, 2-methoxy-2-methyl-1-(3-trimethoxysilylpropyl)-1-aza-2-silacyclopentane, 2-ethoxy-2-ethyl-1-(3-triethoxysilylpropyl)-1-aza-2-silacyclopentane, 2-methoxy-2-methyl-1-(3-dimethoxymethylsilylpropyl)-1-aza-2-silacyclopentane, and 2-ethoxy-2-ethyl-1-(3-diethoxyethylsilylpropyl)-1-aza-2-silacyclopentane.

From the viewpoint of the reactivity and interaction of the functional group in the coupling nitrogen-containing compound with the inorganic filler described below, such as silica, and the processability of the rubber composition for an outsole of the present embodiment, the coupling nitrogen-containing compound is preferably 2,2-dimethoxy-1-(3-trimethoxysilylpropyl)-1-aza-2-silacyclopentane or 2,2-diethoxy-1-(3-triethoxysilylpropyl)-1-aza-2-silacyclopentane.

<Modified Conjugated Diene Polymer>

The conjugated diene polymer as the rubber used in the rubber composition for an outsole of the present embodiment may be modified.

Modification refers to modifying a conjugated diene polymer with a compound that contains nitrogen.

Examples of the modification method include, but are not limited to, a method using a polymerization initiator that contains a nitrogen-containing compound, a method using a nitrogen-containing compound as the polymerization monomer, a method in which the aforementioned coupling nitrogen-containing compound or a non-coupling nitrogen-containing compound is reacted with a reaction terminal, and a method in which a double bond of the conjugated diene polymer after polymerization is reacted with a nitrogen-containing compound for modification.

Examples of the polymerization initiator that contains a nitrogen-containing compound include, but are not limited to, reactants of a nitrogen-containing compound such as dimethylamine, diethylamine, dibutylamine, dipropylamine, diheptylamine, dihexylamine, dioctylamine, di(2-ethylhexyl)amine, didecylamine, ethylpropylamine, ethylbutylamine, ethylbenzylamine, methylphenethylamine, piperidine, hexamethyleneimine, azacyclooctane, 1,3,3-trimethyl-6-azabicyclo[3.2.1]octane, 1,2,3,6-tetrahydropyridine, or 3,5-dimethylpiperidine, with an organic lithium compound such as n-butyllithium, sec-butyllithium, t-butyllithium, n-propyllithium, or i-propyllithium.

Examples of the non-coupling nitrogen-containing compound include, but are not limited to, 1,3-diethyl-2-imidazolinone, 1,3-dimethyl-2-imidazolinone, 1,3-dipropyl-2-imidazolinone, 1-methyl-3-ethyl-2-imidazolinone, 1-methyl-3-propyl-2-imidazolinone, 1-methyl-3-butyl-2-imidazolinone, and 1,3-dihydro-1,3-dimethyl-2H-imidazol-2-one.

<Modification Rate>

As used herein, the term "modification rate" represents the mass proportion of the polymer having a nitrogen atom-containing functional group to the total amount of the polymer, unless otherwise specified herein.

For example, when a modifier that is a nitrogen atom-containing compound is reacted with a terminal of the polymer, the mass proportion of the polymer having a nitrogen atom-containing functional group derived from the modifier to the total amount of the polymer is represented as the modification rate.

Also, when the polymer is branched by a branching agent that contains a nitrogen atom, the branched polymer to be produced has a nitrogen atom-containing functional group, and thus, the branched polymer is counted upon calculation of the modification rate.

Further, the polymer having a nitrogen atom-containing functional group derived from the aforementioned coupling nitrogen-containing compound is also counted upon calculation of the modification rate.

That is, as used herein, the polymer having a nitrogen atom-containing functional group refers to the polymer having a nitrogen atom-containing functional group derived from the modifier, the branched polymer branched by a branching agent having a nitrogen atom-containing functional group, and the polymer having a nitrogen atom-containing functional group derived from the coupling nitrogen-containing compound, and the total mass proportion of them is the "modification rate".

The conjugated diene polymer as the rubber used in the rubber composition for an outsole of the present embodiment preferably has a modification rate measured by the column adsorption GPC method (hereinafter simply referred to as the "modification rate") of 30% or more, more preferably 40% or more, and still more preferably 60% or more based on the total amount of the conjugated diene polymer, from the viewpoint of improving the performance and quality stability by the improvement of processability and filler dispersibility.

On the other hand, from the viewpoint of processability and polymerization stability, the modification rate is preferably 90% or less, more preferably 80% or less, or the conjugated diene polymer may be non-modified.

For example, the modification rate can be measured by chromatography capable of separating functional group-containing modified components and non-modified components.

Examples of the method using the above chromatography include a quantification method in which a column for gel permeation chromatography using a polar material for adsorbing a specific functional group, such as silica, as the filler is used, and an internal standard that is a non-adsorptive component is used for comparison (column adsorption GPC method).

More specifically, the modification rate can be determined by measuring the amount of adsorption to a silica column from the difference between a chromatogram obtained by measuring a sample solution containing a sample and a low-molecular weight internal standard polystyrene with a polystyrene gel column and a chromatogram obtained by measuring the above sample solution with the silica column.

Further specifically, the modification rate can be measured by the method described in Examples.

In the conjugated diene polymer used in the rubber composition for an outsole of the present embodiment, the modification rate can be controlled by adjusting, for example, the amount of the modifier to be added and the reaction method.

<Nitrogen Content>

The content of nitrogen contained in the conjugated diene polymer as the rubber used in the rubber composition for an outsole of the present embodiment is preferably 0 ppm or more and 5,000 ppm or less, more preferably 0 ppm or more and 2,000 ppm or less, still more preferably 0 ppm or more and 1,500 ppm or less, and even more preferably 0 ppm or more and 1,000 ppm or less, from the viewpoint of tear properties.

The nitrogen content can be controlled to the above numerical value range by adjusting the kind of monomer or the amount of the aforementioned modifier to be used upon polymerization of the polymer.

When the rubber composition for an outsole of the present embodiment contains nitrile rubber as the rubber, the content of nitrile rubber based on the whole rubber is preferably 10% by mass or more, more preferably 15% by mass or more, and still more preferably 20% by mass or more, from the viewpoint of grip properties. On the other hand, from the viewpoint of the wear resistance of the rubber composition for an outsole of the present embodiment, the content of nitrile rubber is preferably less than 60% by mass, more preferably 55% by mass or less, and still more preferably 50% by mass or less.

In addition, the proportion of acrylonitrile in the whole nitrile rubber is preferably 17% by mass or more, more preferably 23% by mass or more, and still more preferably 28% by mass or more, from the viewpoint of oil resistance. On the other hand, from the viewpoint of cold resistance, the proportion of acrylonitrile is preferably 50% by mass or less, more preferably 45% by mass or less, and still more preferably 40% by mass or less.

In the rubber composition for an outsole of the present embodiment, the Mooney viscosity is preferably 120 or less, more preferably 90 or less, and still more preferably 60 or less, from the viewpoint of the processability of the rubber composition for an outsole of the present embodiment.

On the other hand, the Mooney viscosity is preferably 25 or more, more preferably 35 or more, still more preferably 45 or more, from the viewpoint of the tensile strength of the rubber composition for an outsole of the present embodiment.

When the rubber composition for an outsole of the present embodiment contains butyl rubber or a bromide or chloride thereof as the rubber, the content thereof based on the whole rubber is preferably 20% by mass or more, more preferably 40% by mass or more, and still more preferably 50% by mass or more, from the viewpoint of weather resistance. On the other hand, from the viewpoint of oil resistance, the content is preferably 85% by mass or less, more preferably 75% by mass or less, and still more preferably 65% by mass or less.

The butyl rubber is preferably a copolymer of isobutylene and isoprene, and from the viewpoint of vulcanizability, the content of isoprene in the copolymer is preferably 1 mol% or more, more preferably 1.5 mol% or more, and still more preferably 2 mol% or more.

When the rubber composition for an outsole of the present embodiment contains epichlorohydrin rubber (ECO) as the rubber, the content based on the whole rubber is preferably 5% by mass or more, more preferably 10% by mass or more, and still more preferably 15% by mass or more, from the viewpoint of oil resistance. On the other hand, the content is preferably 90% by mass or less, more preferably 85% by mass or less, and still more preferably 80% by mass or less, from the viewpoint of processability.

When the rubber composition for an outsole of the present embodiment contains urethane rubber (U) as the rubber, the content based on the whole rubber is preferably 5% by mass or more, more preferably 10% by mass or more, and still more preferably 15% by mass or more, from the viewpoint of tear strength. On the other hand, from the viewpoint of heat resistance, the content is preferably 90% by mass or less, more preferably 85% by mass or less, and still more preferably 80% by mass or less.

When the rubber composition for an outsole of the present embodiment contains chlorosulfonated polyethylene (CSM) as the rubber, the content based on the whole rubber is preferably 5% by mass or more, more preferably 10% by mass or more, and still more preferably 15% by mass or more, from the viewpoint of wear resistance. On the other hand, the content is preferably 90% by mass or less, more preferably 85% by mass or less, and still more preferably 80% by mass or less, from the viewpoint of cold resistance.

When the rubber composition for an outsole of the present embodiment contains acrylic rubber (ACM) as the rubber, the content based on the whole rubber is preferably 5% by mass or more, more preferably 10% by mass or more, and still more preferably 15% by mass or more, from the viewpoint of heat resistance. On the other hand, the content is preferably 90% by mass or less, more preferably 85% by mass or less, and still more preferably 80% by mass or less, from the viewpoint of tensile strength.

When the rubber composition for an outsole of the present embodiment contains silicone rubber (Q) as the rubber, the content based on the whole rubber is preferably 5% by mass or more, more preferably 10% by mass or more, and still more preferably 15% by mass or more, from the viewpoint of weather resistance. On the other hand, the content is preferably 90% by mass or less, more preferably 85% by mass or less, and still more preferably 80% by mass or less, from the viewpoint of tear strength.

When the rubber composition for an outsole of the present embodiment contains fluorine rubber (FKM) as the rubber, the content based on the whole rubber is preferably 5% by mass or more, more preferably 10% by mass or more, and still more preferably 15% by mass or more, from the viewpoint of weather resistance. On the other hand, the content is preferably 90% by mass or less, more preferably 85% by mass or less, and still more preferably 80% by mass or less, from the viewpoint of cold resistance.


(Liquid Rubber)


The rubber composition for an outsole of the present embodiment may contain liquid rubber to improve processability and flexibility.

The liquid rubber is a low-molecular weight rubber polymer, and examples thereof include liquid styrene butadiene rubber (liquid SBR), and liquid diene rubber such as liquid butadiene rubber (liquid BR) and liquid isoprene rubber (liquid IR).

The "liquid rubber" is an arbitrary component capable of being distinguished from the rubber that is a constituent component of the rubber composition for an outsole of the present embodiment by the difference in the form (solid or liquid).

That is, the liquid rubber is liquid in an environment at 23°C and 1 atmosphere, and the rubber that is a constituent component of the rubber composition for an outsole of the present embodiment is solid in the above environment.

The cis content in the liquid BR is not particularly limited, and any of high-cis, medium-cis, and low-cis liquid BR may be contained.

The liquid rubber is not particularly limited as long as it is liquid, and preferably has a peak top molecular weight measured by the GPC measurement method in the range of 1,000 to 50,000. The peak top molecular weight of the liquid rubber measured by the GPC measurement method is preferably 4,000 to 35,000, and still more preferably 7,000 to 30,000. When the peak top molecular weight of the liquid rubber is within the above range, the processability and flexibility of the rubber composition for an outsole are further improved. In the case of using liquid rubber having a low molecular weight, there is a tendency that the processability is improved and the strength is reduced.

The amount of the liquid rubber to be formulated is not particularly limited, and may be, for example, 0 to 15 parts by mass based on 100 parts by mass of the whole rubber used in the rubber composition for an outsole of the present embodiment. The amount of the liquid rubber to be formulated is preferably 0.10 to 10.0 parts by mass, more preferably 0.20 to 7.0 parts by mass, and still more preferably 0.30 to 4.0 parts by mass.

When the amount of the liquid rubber to be formulated is within the above range, the processability and flexibility of the rubber composition for an outsole of the present embodiment tend to be further improved.

(Filler)

The rubber composition for an outsole of the present embodiment contains a filler.

The content of the filler is preferably 5 parts by mass or more, more preferably 10 parts by mass or more, still more preferably 15 parts by mass or more, and even more preferably 18 parts by mass or more based on 100 parts by mass of the aforementioned rubber, from the viewpoint of the hardness and strength of the rubber composition for an outsole of the present embodiment.

On the other hand, from the viewpoint of processability, the content is preferably 80 parts by mass or less, more preferably 60 parts by mass or less, still more preferably 55 parts by mass or less, and even more preferably 50 parts by mass or less.

The kind of filler is not particularly limited, as long as it is typically used as the material of the rubber composition for an outsole, and examples thereof include silica (dry silica, wet silica, colloidal silica), synthetic silicate white carbon, calcium carbonate, titanium oxide, talc, and carbon black. The filler may be used alone or in combination of two or more.

As the filler, silica is particularly preferable.

When silica is used as the filler, a substance for improving the affinity of an inorganic filler such as a silane coupling agent with the rubber component is preferably added to improve the dispersibility of silica and enhance performance stability and reproducibility. The details of the silane coupling agent will be described below.

The filler may be obtained by purchasing a commercially available one, or may be produced by a conventionally known method.

The content of silica based on the total mass of the filler is preferably 70% by mass or more, more preferably 80% by mass or more, still more preferably 90% by mass or more, and even more preferably 95% by mass or more, from the viewpoint of the rigidity of the rubber composition for an outsole of the present embodiment.

Further, when an outsole having a high transparency is obtained or an outsole is colored, it is preferable to contain no carbon black as the filler.

(Tackifier)

The rubber composition for an outsole of the present embodiment contains a tackifier.

Typically, the tackifier is an amorphous oligomer having a molecular weight of several hundred to several thousand, expresses flowability and tackiness by being added to an elastomer, and improves tackiness.

When the rubber composition for an outsole of the present embodiment contains the tackifier, an outsole using the rubber composition for an outsole of the present embodiment exhibits softness that enables deformation corresponding to the unevenness of the floor surface, the real contact area with the floor surface increases to cause friction, so that the grip properties tend to be high. In addition, stickiness is increased by containing the tackifier, so that grip properties tend to be high.

The content of the tackifier in the rubber composition for an outsole of the present embodiment is preferably 1 part by mass or more, more preferably 2 parts by mass or more, more preferably 4 parts by mass or more, still more preferably 5 parts by mass or more, even more preferably 7 parts by mass or more, even more preferably 8 parts by mass or more, and particularly preferably 10 parts by mass or more based on 100 parts by mass of the aforementioned rubber, from the viewpoint of improving grip properties.

On the other hand, from the viewpoint of preventing excess stickiness and adhesion of dust, the content is preferably 50 parts by mass or less, more preferably 40 parts by mass or less, still more preferably 30 parts by mass or less, even more preferably 20 parts by mass or less, and even more preferably 15 parts by mass or less per 100 parts by mass of the aforementioned rubber.

The softening point of the tackifier is preferably 40°C or more, more preferably 50°C or more, and still more preferably 55°C or more, from the viewpoint of preventing the adhesion of dust on the rubber composition for an outsole of the present embodiment.

On the other hand, the softening point is preferably 180°C or less, more preferably 170°C or less, still more preferably 160°C or less, and even more preferably 150°C or less, from the viewpoint of processability.

The softening point of the tackifier can be measured by the ring and ball method of JISK5601-2-2, and can be controlled to the above temperature range by the selection of the material.

The glass transition temperature of the tackifier is preferably -20°C or more, more preferably 0°C or more, and still more preferably 10°C or more, from the viewpoint of the flexibility of the rubber composition for an outsole of the present embodiment. On the other hand, since the tackifier is required to be melted and mixed in the rubber during kneading, the glass transition temperature is preferably 130°C or less, more preferably 120°C or less, and still more preferably 100°C or less. The glass transition temperature of the tackifier can be measured by differential scanning calorimetry (DSC), and can be controlled to the above temperature range by the selection of the material.

The tackifier can be variously selected depending on the application for use in the rubber composition for an outsole, required performance, and the rubber component to be used.

For example, terpene compounds as described below have favorable compatibility with natural rubber, the terpene compound can be prevented from bleeding by using a terpene compound as the tackifier and natural rubber as the rubber.

Examples of the tackifier include, but are not limited to, rosin compounds such as natural rosin, modified rosin, glycerol ester of natural rosin, glycerol ester of modified rosin, pentaerythritol ester of natural rosin, pentaerythritol ester of modified rosin, hydrogenated rosin, and pentaerythritol ester of hydrogenated rosin; terpene compounds such as natural terpene copolymers, three-dimensional polymers of natural terpene, aromatic modified terpene resins, hydrogenated derivatives of aromatic modified terpene resins, terpene phenol resins, hydrogenated derivatives of terpene phenol resins, terpene resins (such as monoterpene, diterpene, triterpene, and polyterpene), hydrogenated terpene resins, and hydrogenated derivatives of hydrogenated terpene resins; petroleum hydrocarbon compounds such as aliphatic petroleum hydrocarbon resins (C5 resins), aliphatic tackifiers such as hydrogenated derivatives of aliphatic petroleum hydrocarbon resins, aromatic petroleum hydrocarbon resins (C9 resins), aromatic tackifiers such as hydrogenated derivatives of aromatic petroleum hydrocarbon resins, dicyclopentadiene resins, hydrogenated derivatives of dicyclopentadiene resins, C5/C9 copolymer resins, hydrogenated derivatives of C5/C9 copolymer resins, cyclic aliphatic petroleum hydrocarbon resins, and hydrogenated derivatives of cyclic aliphatic petroleum hydrocarbon resins, and aromatic group-containing resins.

These tackifiers may be used alone or in combination of two or more.

The C5/C9 copolymer refers to a copolymer petroleum resin obtained by polymerizing a mixture of a C5 fraction and a C9 fraction as the raw material.

For the tackifier, a liquid-type tackifier having a colorless to pale yellow color tone, substantially no odor, and a favorable thermal stability may also be used.

Hereinafter, preferred tackifiers will be specifically described according to applications and performance.

<Hydrogenated Derivative Tackifier>

From the viewpoint of less odor and quality stability, a hydrogenated derivative is preferably used as the tackifier.

Examples of the hydrogenated derivative include, but are not limited to, hydrogenated derivatives of aromatic modified terpene resins, hydrogenated derivatives of terpene phenol resins, hydrogenated derivatives of hydrogenated terpene resins, hydrogenated derivatives of aliphatic petroleum hydrocarbon resins (C5 resins), hydrogenated derivatives of aromatic petroleum hydrocarbon resins (C9 resins), hydrogenated derivatives of dicyclopentadiene resins, hydrogenated derivatives of C5/C9 copolymer resins, and hydrogenated derivatives of cyclic aliphatic petroleum hydrocarbon resins.

Among them, in particular, hydrogenated derivatives of aromatic petroleum hydrocarbon resins (C9 resins), hydrogenated derivatives of dicyclopentadiene resins, hydrogenated derivatives of hydrogenated terpene resins, and the like are preferable.

Examples of commercial products of such hydrogenated derivatives include, but are not limited to, ARKON P and M series (trade name) manufactured by Arakawa Chemical Industries, Ltd., I-MARV S and P series manufactured by Idemitsu Kosan Co., Ltd., ESCOREZ 5000 series (trade name) manufactured by Exxon Mobil Corporation, and CLEARON P series manufactured by YASUHARA CHEMICAL CO., LTD.

Further examples of ESCOREZ 5000 series include ESCOREZ 5600 which is a hydrogenated derivative of a copolymer of dicyclopentadiene and an aromatic compound, and ESCOREZ 5300 and ESCOREZ 5400 which are hydrogenated derivatives of dicyclopentadiene.

<Tackifier Other Than Hydrogenated Derivative>

Examples of the tackifier other than the hydrogenated derivative include, but are not limited to, natural rosin, modified rosin, glycerol ester of natural rosin, glycerol ester of modified rosin, pentaerythritol ester of natural rosin, pentaerythritol ester of modified rosin, hydrogenated rosin, pentaerythritol ester of hydrogenated rosin; copolymers of natural terpenes, three dimensional polymers of natural terpenes, aromatic modified terpene resins, terpene phenol resins, terpene resins, hydrogenated terpene resins; aliphatic petroleum hydrocarbon resins (C5 resins), aromatic petroleum hydrocarbon resins (C9 resins), dicyclopentadiene resins, C5/C9 copolymer resins, cyclic aliphatic petroleum hydrocarbon resins, and alkylphenol.

Among them, aliphatic petroleum hydrocarbon resins (C5 resins), aromatic petroleum hydrocarbon resins (C9 resins), C5/C9 copolymer resins, cyclic aliphatic petroleum hydrocarbon resins, terpene resins, natural and modified rosin esters, and mixtures thereof are preferable.

Examples of the commercial product include, but are not limited to, Quintone 100 series (trade name) manufactured by Zeon Corporation, ESCOREZ 1000 series manufactured by Exxon Mobil Corporation, and WINGTACK series (trade name) manufactured by Cray Valley for aliphatic petroleum hydrocarbon resins (C5 resins); PICCOTAC series (trade name) manufactured by Eastman Chemical Japan Ltd., ESCOREZ 2000 series (trade name) manufactured by Exxon Mobil Corporation., and FTR series (trade name) manufactured by Mitsui Chemicals, Inc. for aromatic petroleum hydrocarbon resins (C9 resins) and C5/C9 copolymer resins; and SYLVALITE series and SYLVARES series (trade name) manufactured by Arizona Chemical Company, and PICCOLYTE series (trade name) manufactured by PINOVA, Inc. for terpene resins and natural and modified rosin esters.

<Aliphatic Tackifier>

From the viewpoint of obtaining a rubber composition for an outsole having high gripping force and economic efficiency, an aliphatic tackifier is preferably used as the tackifier.

Examples of the aliphatic tackifier include, but are not limited to, aliphatic petroleum hydrocarbon resins (C5 resins), hydrogenated derivatives of aliphatic petroleum hydrocarbon resins (C5 resins), C5/C9 copolymer resins, and hydrogenated derivatives of C5/C9 copolymer resins.

The aliphatic tackifier refers to a tackifier in which the content of aliphatic hydrocarbon groups is preferably 50% by mass or more, more preferably 70% by mass or more, still more preferably 80% by mass or more, even more preferably 88% by mass or more, and even more preferably 95% by mass or more. When the content of the aliphatic hydrocarbon group is within the above range, tackiness, holding force, and economic efficiency tend to be further improved.

The aliphatic tackifier can be produced by subjecting a monomer having an aliphatic group and a polymerizable unsaturated group to homopolymerization or copolymerization.

Examples of the monomer having an aliphatic group and a polymerizable unsaturated group include, but are not limited to, natural and synthetic terpenes containing a C5 or C6 cyclopentyl or cyclohexyl group. Examples of other monomers capable of being used in copolymerization include, but are not limited to, 1,3-butadiene, cis-1,3-pentadiene, trans-1,3-pentadiene, 2-methyl-1,3-butadiene, 2-methyl-2-butene, cyclopentadiene, dicyclopentadiene, terpenes, and terpene-phenol resins.

<Aromatic Tackifier>

From the viewpoint of processability and obtaining a rubber composition for an outsole in which bleeding is prevented due to a high compatibility with the aforementioned rubber, an aromatic tackifier is preferably used as the tackifier.

Examples of the aromatic tackifier include, but are not limited to, aromatic petroleum hydrocarbon resins (C9 resins) and C5/C9 copolymer resins.

The aromatic tackifier refers to a tackifier in which the content of aromatic hydrocarbon groups is preferably 50% by mass or more, more preferably 70% by mass or more, still more preferably 80% by mass or more, even more preferably 88% by mass or more, and even more preferably 95% by mass or more.

When the content of the aromatic hydrocarbon group is within the above range, tack strength and coatability tend to be further improved.

The aromatic tackifier can be produced by subjecting a monomer having each of an aromatic group and a polymerizable unsaturated group to homopolymerization or copolymerization.

Examples of the monomer having each of an aromatic group and a polymerizable unsaturated group include, but are not limited to, styrene, α-methylstyrene, vinyltoluene, methoxystyrene, tert-butylstyrene, chlorostyrene, and indene monomers (including methylindene). Examples of other monomers capable of being used in copolymerization include, but are not particularly limited to, 1,3-butadiene, cis-1,3-pentadiene, trans-1,3-pentadiene, 2-methyl-1,3-butadiene, 2-methyl-2-butene, cyclopentadiene, dicyclopentadiene, terpenes, and terpene-phenol resins.

As the tackifier used in the rubber composition for an outsole of the present embodiment, a tackifier having a high affinity with the aforementioned rubber is preferably used.

As the tackifier used in the rubber composition for an outsole of the present embodiment, it is preferable to select a tackifier such that the inflection point derived from glass transition measured when the temperature is increased from -120°C to 0°C at a 10°C/min in the differential scanning calorimeter (DSC) measurement of the aforementioned mixture with the conjugated diene polymer is only one.

In the rubber composition for an outsole of the present embodiment, a conjugated diene polymer is preferably used as the rubber, and polybutadiene or a styrene-butadiene copolymer is preferably used as the conjugated diene polymer. In the case of containing such polybutadiene or a styrene-butadiene copolymer and a tackifier, an inflection point derived from the glass transition temperature appears at - 120°C to 0°C. To make the inflection point derived from glass transition only one, a tackifier having favorable compatibility with the conjugated diene polymer is preferably used, and the index of favorable compatibility is a small difference in the SP value between the rubber and the tackifier.

Satisfying the above means that the compatibility between the conjugated diene polymer and the tackifier is relatively high. Consequently, bleeding to the surface is small, and the balance between grip properties and wear resistance can be stably exhibited at a high level.

On the other hand, when the compatibility between the conjugated diene polymer and the tackifier is poor, the bleeding of the tackifier tends to be slightly increased, and stickiness is generated. In this case, the amount of the tackifier to be added is preferably set to 10 parts by mass or less based on 100 parts by mass of the conjugated diene polymer.

In the tackifier used in the rubber composition for an outsole of the present embodiment, the difference in the SP value with the rubber is preferably 0.8 $(cal/cm^3)^2$ or less, more preferably 0.55 $(cal/cm^3)^2$ or less, and still more preferably 0.3 $(cal/cm^3)^2$ or less, from the viewpoint of transparency.

When the tackifier used in the rubber composition for an outsole of the present embodiment is the terpene resin, the conjugated diene polymer as the rubber preferably has a content of the aromatic vinyl monomer unit of 10% by mass or more and 50% by mass or less, more preferably 10% by mass or more and 40% by mass or less, and still more preferably 10% by mass or more and 30% by mass or less, and preferably has an amount of vinyl bonds of 24% or more and 60% or less, more preferably 28% or more and 58% or less, and still more preferably 29% or more and 57% or less, from the viewpoint of the compatibility between the aforementioned rubber and the tackifier.

When the tackifier used in the rubber composition for an outsole of the present embodiment is the petroleum hydrocarbon compound, the conjugated diene polymer as the rubber preferably has a content of the aromatic vinyl monomer unit of 20% by mass or more and 60% by mass or less, more preferably 24% by mass or more and 60% by mass or less, and still more preferably 30% by mass or more and 58% by mass or less, and preferably has an amount of vinyl bonds of 20% or more and 55 mol% or less, more preferably 22% or more and 55% or less, and still more preferably 23% or more and 54% or less, from the viewpoint of the compatibility between the aforementioned rubber and the tackifier.

In the tackifier used in the rubber composition for an outsole of the present embodiment, the difference in the glass transition temperature with the rubber is preferably 10°C or more, more preferably 20°C or more, and still more preferably 30°C or more, from the viewpoint of preventing the outsole from curing at low temperatures.

On the other hand, from the viewpoint of preventing adhesion of dust, the difference is preferably 180°C or less, more preferably 170°C or less, and still more preferably 160°C or less.

In the tackifier used in the rubber composition for an outsole of the present embodiment, the b* value is preferably 50 or less, more preferably 35 or less, and still more preferably 20 or less, from the viewpoint of design properties.

In the mixture of the rubber and the tackifier constituting the rubber composition for an outsole of the present embodiment, Tg in differential scanning calorimetry (DSC) is preferably only one, from the viewpoint of processability.

(Crosslinking Agent)

The rubber composition for an outsole of the present embodiment is preferably a crosslinked body of a composition containing a predetermined crosslinking agent in addition to rubber, a filler, and a tackifier.

The crosslinking agent is not particularly limited, and a conventionally known crosslinking agent that is used for crosslinking the rubber composition can be used.

Suitable examples of the crosslinking agent include sulfur, sulfur compounds, organic peroxides, and radical crosslinking agents.

Examples of the organic peroxide include, but are not limited to, dicumyl peroxide, benzoyl peroxide, di-t-hexyl peroxide, t-butyl cumyl peroxide, diisobutyryl peroxide, 2,5-dimethyl-2,5-di(t-butylperoxy)hexane, 1,1-bis(t-butylperoxy)-3,5,5-trimethylcyclohexane, di(2-t-butylperoxyisopropyl)benzene, cumyl peroxyneodecanoate, di-n-propyl peroxydicarbonate, diisopropyl peroxydicarbonate, di-sec-butyl peroxydicarbonate, 1,1,3,3-tetramethylbutyl peroxyneodecanoate, di(4-t-butylcyclohexyl) peroxydicarbonate, di(2-ethylhexyl) peroxydicarbonate, t-hexyl peroxyneodecanoate, t-butyl peroxyneodecanoate, t-butyl peroxyneoheptanoate, t-hexyl peroxypivalate, t-butyl peroxypivalate, di(3,5,5-trimethylhexanoyl) peroxide, dilauroyl peroxide, 1,1,3,3-tetramethylbutylperoxy-2-ethylhexanoate, disuccinic peroxide, 2,5-dimethyl-2,5-di(2-ethylhexanoylperoxy)hexane, t-hexylperoxy-2-ethylhexanoate, di(4-methylbenzoyl) peroxide, t-butylperoxy-2-ethylhexanoate, di(3-methylbenzoyl) peroxide, benzoyl(3-methylbenzoyl) peroxide, dibenzoyl peroxide, 1,1-di(t-butylperoxy)-2-methylcyclohexane, 1,1-di(t-hexylperoxy)-3,5,5-trimethylcyclohexane, 1,1-di(t-hexylperoxy)cyclohexane, 1,1-di(t-butylperoxy)cyclohexane, 2,2-di(4,4-di-(t-butylperoxy)cyclohexyl)propane, t-hexylperoxyisopropyl monocarbonate, t-butylperoxymaleic acid, t-butylperoxy-3,5,5-trimethylhexanoate, t-butylperoxy laurate, t-butylperoxyisopropyl monocarbonate, t-butylperoxy 2-ethylhexyl monocarbonate, t-hexyl peroxybenzoate, 2,5-dimethyl-2,5-di(benzoylperoxy)hexane, t-butyl peroxyacetate, 2,2-di-(t-butylperoxy)butane, t-butyl peroxybenzoate, n-butyl-4,4-di-(t-butylperoxy) valerate, di(2-t-butylperoxyisopropyl)benzene, di-t-butyl peroxide, p-menthanehydroperoxide, 2,5-dimethyl-2,5-di(t-butylperoxy)hexine-3, diisopropylbenzene hydroperoxide, 1,1,3,3-tetramethylbutyl hydroperoxide, cumene hydroperoxide, and t-butyl hydroperoxide.

Examples of the radical crosslinking agent include, but are not limited to, ethylene glycol methacrylate (EGDMA), trimethylolpropanetrimethacrylate, triallyl isocyanurate, triallyl cyanurate, diethyleneglycol diacrylate, and neophenylene glycol diacrylate.

When low contamination on the product, transparency, colorability, and heat resistance are regarded as important, a peroxide is preferably selected as the crosslinking agent. From the viewpoint of less odor and low residues, the crosslinking agent is still more preferably dicumyl peroxide, 2,5-dimethyl-2,5-di(t-butylperoxy)hexane, di(2-t-butylperoxyisopropyl)benzene, or 1,1-di(t-butylperoxy)cyclohexane.

When rubber having few double bonds, such as butyl rubber, silicone rubber, or fluorine rubber, is used as the rubber, an organic peroxide is preferably selected as the crosslinking agent.

On the other hand, when costs, tensile characteristics, and easy processability are regarded as important, crosslinking is preferably carried out using sulfur or a sulfur compound, and a vulcanizing accelerator. Examples of the sulfur compound include sulfur monochloride, sulfur dichloride, disulfide compounds, and high molecular polysulfide compounds.

The above crosslinking agents may be used alone, or in combination of two or more.

In the production process of an outsole, the content of the crosslinking agent contained in the rubber composition for an outsole before molding is preferably 0.01 parts by mass or more and 20 parts by mass or less, and more preferably 0.1 parts by mass or more and 15 parts by mass or less based on 100 parts by mass of the rubber. As the vulcanization method, a conventionally known method can be applied, and the vulcanization temperature is preferably 120°C or more and 200°C or less, and more preferably 140°C or more and 180°C or less.

In the vulcanization using sulfur or a sulfur compound, a vulcanizing accelerator may be used, if necessary.

As the vulcanizing accelerator, a conventionally known material can be used, and examples thereof include, but are not limited to, sulfenamide, guanidine, thiuram, aldehyde-amine, aldehyde-ammonia, thiazole, thiourea, and dithiocarbamate vulcanizing accelerators. Examples of the vulcanizing aid include, but are not limited to, zinc white, stearic acid, and triallyl isocyanurate. The content of the vulcanizing accelerator is preferably 0.01 parts by mass or more and 20 parts by mass or less, and more preferably 0.1 parts by mass or more and 15 parts by mass or less based on 100 parts by mass of the rubber component.

(Other Components)

When silica is used as the filler, the rubber composition for an outsole of the present embodiment preferably contains a silane coupling agent. According to this aspect, the dispersibility of the inorganic filler and the adhesiveness with the rubber tend to be improved, and transparency and strength tend to be further improved.

Examples of the silane coupling agent include, but are not limited to, alkoxysilane compounds such as tetraethoxysilane, vinyltrimethoxysilane, vinyltris(2-methoxyethoxy)silane, 3-aminopropyltriethoxysilane, 3-glycidoxypropylmethyldimethoxysilane, bis-[3-(triethoxysilyl)-propyl]tetrasulfide, bis-[3-(triethoxysilyl)-propyl]disulfide, and triethoxysilylpropyl-methacrylate-monosulfide.

The silane coupling agent is preferably a polysiloxane containing a vinyl group and an alkoxy group, more preferably a polysiloxane containing a vinyl group and an ethoxy group or a methoxy group, and still more preferably vinyltrimethoxysilane or vinyltris(2-methoxyethoxy)silane.

The above silane coupling agents may be used alone, or in combination of two or more.

The content of the silane coupling agent is not particularly limited, and for example, may be 0 to 20 parts by mass based on 100 parts by mass of the rubber. The content of the silane coupling agent is more preferably 0.50 to 10 parts by mass.

The rubber composition for an outsole of the present embodiment may further contain other components. Examples of other components include antioxidants, colorants, modifiers, processing agents (such as fatty acid), reducing agents, deoxygenating agents, light stabilizers, pH stabilizers, surface treatment agents, thermal stabilizers, colorants, fillers (such as talc and calcium carbonate), surfactants, gelling agents, UV absorption agents (such as salicylic acid, benzophenone, benzotriazole, cyanoacrylate, and hindered amine), dusting agents (polyolefins such as polyethylene, talc, and calcium carbonate powder), and polyphosphoric acid.

These components may be used alone, or in combination of two or more.

Examples of the antioxidant include, but are not limited to, monophenol, bisphenol, polyphenol, sulfur, and phosphorus compounds, and specific examples thereof include NOCRAC SP (manufactured by OUCHI SHINKO CHEMICAL INDUSTRIAL CO., LTD.), Irganox 1076 (manufactured by BASF), Irgafos 168 (manufactured by BASF), and Irganox 1520 (manufactured by BASF).

The colorant may be used in the case of coloring the outsole.

As such a colorant, an arbitrary known colorant may be used, and examples thereof include coloring pigments, extenders, anticorrosive pigments, and functional pigments (such as phthalocyanine green, titanium, iron blue, iron oxide, lead suboxide, and zinc sulfide).

The rubber composition for an outsole of the present embodiment may contain one or more components such as antioxidants, colorants, modifiers, processing agents, reducing agents, deoxygenating agents, light stabilizers, pH stabilizers, surface treatment agents, thermal stabilizers, colorants, fillers, surfactants, gelling agents, UV absorption agents, dusting agents, and polyphosphoric acid, for example, in the range of 0.1 to 15 parts by mass in total based on 100 parts by mass of the rubber component. In the case of containing these components, the total content of these components is preferably 0.2 to 10 parts by mass, more preferably 0.20 to 5.0 parts by mass, and still more preferably 0.25 to 2.0 parts by mass.

(Transparency)

The rubber composition for an outsole of the present embodiment may be used for a transparent outsole having high transparency.

The transparency of an outsole is evaluated by a HAZE.

A low HAZE indicates high transparency. Typically, an outsole having a HAZE of more than 50% is "opaque" or "translucent", and an outsole having a HAZE of 50% or less is "transparent". From the viewpoint of obtaining excellent transparency, the rubber composition for an outsole of the present embodiment preferably has a HAZE of 50% or less.

The term "HAZE" refers to the degree of haze of a transparent material measured in accordance with Japanese Industrial Standards JIS K7136 (or ISO 14782). As used herein, the HAZE can be measured by using a sheet having a thickness of 3.00 mm as a measurement sample and using a test apparatus according to the above standard. Specifically, the HAZE can be measured by the method described in Examples described below.

The HAZE of the rubber composition for an outsole of the present embodiment can be controlled to the above numerical value by selecting the constituent materials. For example, silica is preferably used as the filler.

[Outsole]

The outsole of the present embodiment is a molded body of the rubber composition for an outsole of the present embodiment.

The outsole of the present embodiment can be produced by crosslinking the rubber composition for an outsole of the present embodiment containing the aforementioned rubber, filler, and tackifier, using a crosslinking agent, further optionally adding other components at an appropriate formulation ratio, and kneading the mixture.

More specifically, for example, the following method may be used.

As an example, the method for producing the outsole of the present embodiment includes a step of kneading a conjugated diene polymer and other diene rubbers as the rubber, silica as the filler, an arbitrary tackifier, a silane coupling agent, a crosslinking agent, a crosslinking aid, and an antioxidant, and a step of molding the obtained kneaded material.

The above kneading step can be carried out by using, for example, an open roll, a Banbury mixer, a kneader, a twin-screw extruder, and/or Labo Plastomill. In the kneading step, the above components may be kneaded all at one time, or after the rubber, the filler, and the silane coupling agent are kneaded, other additives may be kneaded.

Kneading with the rubber may be carried out, for example, at a temperature of 120 to 160°C, from the viewpoint of uniformly mixing the components.

Kneading after addition of the crosslinking agent may be carried out, for example, at a temperature of 120°C or less, from the viewpoint of preventing a side reaction, or the like. The temperature during kneading after addition of the crosslinking agent is preferably 100°C or less, more preferably 80°C or less, and still more preferably 0 to 50°C.

In the above kneading step, components other than the above components may be appropriately added.

The molding step of molding the kneaded material enables a crosslinked rubber composition in a desired shape to be obtained. The molding step may be, for example, a step of putting the kneaded material obtained in the kneading step in a press mold having an appropriate shape and heating the kneaded material.

The molding temperature during the molding step is not particularly limited, and is preferably 140 to 180°C, and more preferably 150 to 170°C.

The outsole of the present embodiment is used as the outsole for shoes.

[Application of Outsole]

The rubber composition for an outsole of the present embodiment can be used regardless of the application of shoes; however, the required performance and the values of physical properties causing no problem in a practical use are different depending on the applications. For example, sport shoes require strength capable of withstanding vigorous exercise, wear resistance, and grip properties, and thus require a favorable balance among strength, wear resistance, and grip properties, as compared with normal shoes. In particular, grip properties are important in sports such as basketball, that repeat sudden acceleration and sudden stops.

In addition, wet grip properties are also important for preventing slips, for example, in use on a wet outdoor ground in sports or in use on a floor surface wetted with sweat.

Further, trekking shoes and the like are used in the case of walking on a wet boardwalk or rock in a slippery mountain stream and the like in the mountains. Since the risk of slips is higher than usual, wear resistance and strength such that wear hardly occurs even in climbing in rocky areas are required in addition to high grip properties.

These applications are examples of the application of the outsole of the present embodiment, and the values of physical properties causing no problem in a practical use are different depending on the applications, and can be appropriately adjusted.

Examples

Hereinafter, the present embodiment will be described further in detail by way of specific Production Examples, Examples, and Comparative Examples, but the present invention is not limited to the following Production Examples, Examples, and Comparative Examples in any way.

Various physical properties in Production Examples, Examples, and Comparative Examples were measured by the following methods.

[Physical Property Measurement Method]

[Peak Top Molecular Weight, Weight Average Molecular Weight]

Using a GPC measurement apparatus in which three columns using a polystyrene gel as the filler were connected, the chromatogram was measured, and the weight average molecular weight and the peak top molecular weight were determined based on the calibration curve using standard polystyrene.

Table 1 shows the peak top molecular weights of non-coupling bodies and the peak top molecular weights of coupling bodies.

Specific measurement conditions are shown below.

Measurement was carried out by injecting 20 μL of the following measurement liquid into the GPC measurement apparatus.

(Measurement conditions)

Apparatus: trade name "HLC-8320GPC" manufactured by Tosoh Corporation

Eluent: tetrahydrofuran (THF) containing 5 mmol/L of triethylamine

Guard column: trade name "TSKguardcolumn SuperH-H" manufactured by Tosoh Corporation,

Separation column: one obtained by connecting trade name "TSKgel SuperH5000", "TSKgel SuperH6000", and "TSKgel SuperH7000" manufactured by Tosoh Corporation in the order presented.

Oven temperature: 40°C

Flow rate: 0.6 mL/min

Detector: RI detector (trade name "HLC8020" manufactured by Tosoh Corporation)

Measurement liquid: a measurement solution obtained by dissolving 10 mg of a measurement sample in 20 mL of THF

[Modification Rate]

By using the property such that the modified polymer is adsorbed to the column, the modification rate was measured by the column adsorption GPC method as follows.

The modification rate was determined by measuring the amount of adsorption to a silica column from the difference between a chromatogram obtained by measuring a sample solution containing a sample and a low-molecular weight internal standard polystyrene with a column packed with polystyrene gel and a chromatogram obtained by measuring the above sample solution with a column packed with silica gel.

(GPC Measurement Conditions Using Polystyrene Column)

The GPC measurement conditions using polystyrene columns are shown below. Measurement was carried out by injecting 20 $\mu$L of the following measurement liquid into the GPC measurement apparatus.

Apparatus: trade name "HLC-8320GPC" manufactured by Tosoh Corporation

Eluent: THF containing 5 mmol/L of triethylamine

Guard column: trade name "TSKguardcolumn SuperH-H" manufactured by Tosoh Corporation

Column: one obtained by connecting trade name "TSKgel SuperH5000", "TSKgel SuperH6000", and "TSKgel SuperH7000" manufactured by Tosoh Corporation in the order presented

Oven temperature: 40°C

Flow rate: 0.6 mL/min

Detector: RI detector (HLC8020 manufactured by Tosoh Corporation)

Measurement liquid: 10 mg of a sample and 5 mg of standard polystyrene were dissolved in 20 mL of THF to prepare a sample solution.

(GPC Measurement Conditions Using Silica Column)

The GPC measurement conditions using silica columns are shown below. Measurement was carried out by injecting 50 $\mu$L of the following measurement liquid into the GPC measurement apparatus.

Apparatus: trade name "HLC-8320GPC" manufactured by Tosoh Corporation

Eluent: THF

Guard column: trade name "DIOL 4.6 $\times$ 12.5 mm 5 micron" manufactured by GL Sciences Inc.

Separation column: one obtained by connecting trade name "Zorbax PSM-1000S", "PSM-300S", and "PSM-60S" manufactured by Agilent Technologies in the order presented

Oven temperature: 40°C

Flow rate: 0.5 mL/min

Detector: RI detector (HLC8020 manufactured by Tosoh Corporation)

(Method for Calculating Modification Rate):

The modification rate (%) was determined by the following equation, where P1 denotes the peak area of the sample and P2 denotes the peak area of the standard polystyrene when the whole peak area of the chromatogram using the polystyrene column is taken as 100, and P3 denotes the peak area of the sample and P4 denotes the peak area of the standard polystyrene when the whole peak area of the chromatogram using the silica column is taken as 100.

$$\text{Modification rate (\%)} = [1 - (P2 \times P3)/(P1 \times P4)] \times 100$$

(provided that, P1 + P2 = P3 + P4 = 100)

[Coupling Rate]

The chromatogram was measured in the same manner as the measurement method of the aforementioned weight average molecular weight and peak top molecular weight, and when there are two or more peaks, the coupling rate was calculated from the ratio of the non-coupling (the peak on the low molecular weight side) peak area to the coupling (the peak on the high molecular weight side) peak area. When there is only one peak, the coupling rate was determined as 0%. When there are three or more peaks, the peak of the lowest molecular weight was considered as the peak of the non-coupled component, and the peaks of the components on the higher molecular weight side than the peak of the non-coupled component were considered as the coupled peaks.
The peak in the present example is a portion having the maximum value in the GPC measurement and sandwiched between the base lines or minimum values, and refers to one having a peak molecular weight at the maximum value of 10,000 or more and a peak area of 5% or more.

[Mooney Viscosity]

The Mooney viscosity of each polymer was measured using a Mooney viscometer (trade name "VR1132" manufactured by Ueshima Seisakusho Co., Ltd.) in accordance with JIS K6300 (ISO289-1) and ISO289-4. The measurement temperature was set to 100°C.
Here, after the sample was preheated for 1 minute, the rotor was rotated at 2 rpm, and the torque after 4 minutes was measured and used as the Mooney viscosity ($ML_{(1+4)}$).

[Content of Bonded Styrene, Amount of 1,2-Vinyl Bond in Butadiene Portion]

The content of the aromatic vinyl monomer unit (the content of bonded styrene) and the amount of 1,2-vinyl bonds were measured by $^1$H-NMR measurement using a conjugated diene polymer as the sample.

<Measurement Conditions>

Measurement equipment: JNM-LA400 (manufactured by JEOL)

Solvent: deuterated chloroform

Measurement sample: conjugated diene polymer

Sample concentration: 50 mg/mL

Observed frequency: 400 MHz

Chemical shift criteria: 5% by weight of TMS (tetramethylsilane) was added to deuterated chloroform

Pulse delay: 2.904 seconds

Number of scanning: 64 times

Pulse width: 45°

Measurement temperature: 26°C

[Content of Styrene Block]

The content of the aromatic vinyl monomer block (styrene block) was measured in accordance with the osmium tetroxide decomposition method described in I. M. Kolthoff, et al., J. Polym. Sci. 1,429 (1946).

More specifically, 0.050 g of styrene-butadiene copolymer rubber was dissolved in 10 ml of chloroform, 16 mL of a 69% by mass aqueous solution of tert-butyl hydroperoxide and 4.0 mL of a 0.050% by mass solution of osmium tetroxide in chloroform were added, and the mixture was refluxed in a 90°C bath for 12 minutes to carry out the oxidative decomposition reaction. After the reaction was terminated, the reaction solution was cooled, 200 mL of methanol was added into the reaction solution while stirring to precipitate the styrene block component, and this was filtered off through a 5 μm glass filter. The mass of the obtained product was divided by the total mass of the styrene-butadiene copolymer rubber to determine the content of the styrene block.

[Production of Conjugated Diene Polymer]

((Production Example 1) Conjugated Diene Polymer 1)

Using an autoclave with an internal volume of 10 L, provided with a stirrer and a jacket, and capable of controlling the temperature as a reactor, 648 g of 1,3-butadiene, 552 g of styrene, 5,600 g of cyclohexane, 7.81 mmol of tetrahydrofuran (THF) and 0.772 mmol of 2,2-bis(2-oxolanyl)propane serving as polar materials, and 0.458 mmol of potassium-t-amylalkoxide, from which impurities were previously removed, were put in the reactor, and the reactor internal temperature was held at 51°C.

As a polymerization initiator, 5.72 mmol of n-butyllithium was supplied to the reactor.

After the polymerization reaction was initiated, the temperature in the reactor was increased by the heat generated by polymerization, and the reaction peak temperature was 81°C. To the polymer solution, 5.72 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 1.

The obtained conjugated diene polymer 1 was analyzed by the above method, and the analysis results are shown in Table 1.

((Production Example 2) Conjugated Diene Polymer 2)

Using an autoclave with an internal volume of 10 L, provided with a stirrer and a jacket, and capable of controlling the temperature as a reactor, 454 g of 1,3-butadiene, 468 g of styrene, 5,600 g of cyclohexane, and 7.81 mmol of tetrahydrofuran (THF) and 0.858 mmol of 2,2-bis(2-oxolanyl)propane serving as polar materials, from which impurities were previously removed, were put in the reactor, and the reactor internal temperature was held at 52°C.

As a polymerization initiator, 6.20 mmol of n-butyllithium was supplied to the reactor.

After the polymerization reaction was initiated, the temperature in the reactor was increased by the heat generated by polymerization, and a reaction peak was confirmed at 76°C. Thereafter, 194 g of 1,3-butadiene was added to the reactor, and a reaction peak was confirmed at 79°C. Further thereafter, 80 g of styrene was added to the reactor, and a reaction peak was confirmed at 81°C. To the polymer solution, 6.20 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 2.

The obtained conjugated diene polymer 2 was analyzed by the above method, and the analysis results are shown in Table 1.

((Production Example 3) Conjugated Diene Polymer 3)

Using an autoclave with an internal volume of 10 L, provided with a stirrer and a jacket, and capable of controlling the temperature as a reactor, 454 g of 1,3-butadiene, 552 g of styrene, 5,600 g of cyclohexane, and 7.81 mmol of tetrahydrofuran (THF) and 0.824 mmol of 2,2-bis(2-oxolanyl)propane serving as polar materials, from which impurities were previously removed, were put in the reactor, and the reactor internal temperature was held at 52°C.

As a polymerization initiator, 5.77 mmol of n-butyllithium was supplied to the reactor.

After the polymerization reaction was initiated, the temperature in the reactor was increased by the heat generated by polymerization, and a reaction peak was confirmed at 76°C. Thereafter, 194 g of 1,3-butadiene was added to the reactor, and a reaction peak was confirmed at 84°C. To the polymer solution, 5.77 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 3.

The obtained conjugated diene polymer 3 was analyzed by the above method, and the analysis results are shown in Table 1.

((Production Example 4) Conjugated Diene Polymer 4)

Using an autoclave with an internal volume of 10 L, provided with a stirrer and a jacket, and capable of controlling the temperature as a reactor, 454 g of 1,3-butadiene, 552 g of styrene, 5,600 g of cyclohexane, and 7.81 mmol of tetrahydrofuran (THF) and 0.824 mmol of 2,2-bis(2-oxolanyl)propane serving as polar materials, from which impurities were previously removed, were put in the reactor, and the reactor internal temperature was held at 48°C.

As a polymerization initiator, 5.77 mmol of n-butyllithium was supplied to the reactor.

After the polymerization reaction was initiated, the temperature in the reactor was increased by the heat generated by polymerization, and a reaction peak was confirmed at 73°C. Thereafter, 194 g of 1,3-butadiene was added to the reactor, and a reaction peak was confirmed at 78°C. To the polymer solution, 5.77 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 4.

The obtained conjugated diene polymer 4 was analyzed by the above method, and the analysis results are shown in Table 1.

((Production Example 5) Conjugated Diene Polymer 5)

Using an autoclave with an internal volume of 10 L, provided with a stirrer and a jacket, and capable of controlling the temperature as a reactor, 444 g of 1,3-butadiene, 756 g of styrene, 5,600 g of cyclohexane, 7.81 mmol of tetrahydrofuran (THF) and 5.17 mmol of 2,2-bis(2-oxolanyl)propane serving as polar materials, and potassium-t-amylalkoxide 0.245 mmol, from which impurities were previously removed, were put in the reactor, and the reactor internal temperature was held at 43°C.

As a polymerization initiator, 6.86 mmol of n-butyllithium was supplied to the reactor.

After the polymerization reaction was initiated, the temperature in the reactor was increased by the heat generated by polymerization and reached the reaction temperature peak at 87°C, and 1.37 mmol of 1,3-bis(N,N'-diglycidyl aminomethyl)cyclohexane was then added as a coupling agent and stirred for 5 minutes. The coupling rate was 79.6%. To the polymer solution, 1.37 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 5.

The obtained conjugated diene polymer 5 was analyzed by the above method, and the analysis results are shown in Table 1.

((Production Example 6) Conjugated Diene Polymer 6)

Using an autoclave with an internal volume of 10 L, provided with a stirrer and a jacket, and capable of controlling the temperature as a reactor, 444 g of 1,3-butadiene, 756 g of styrene, 5,600 g of cyclohexane, 7.81 mmol of tetrahydrofuran (THF) and 4.043 mmol of 2,2-bis(2-oxolanyl)propane serving as polar materials, and 0.656 mmol of potassium-t-amylalkoxide, from which impurities were previously removed, were put in the reactor, and the reactor internal temperature was held at 44°C.

As a polymerization initiator, 8.20 mmol of n-butyllithium was supplied to the reactor.

After the polymerization reaction was initiated, the temperature in the reactor was increased by the heat generated by polymerization, and the reaction peak temperature was 85°C. To the polymer solution, 8.20 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 6.

The obtained conjugated diene polymer 6 was analyzed by the above method, and the analysis results are shown in Table 1.

((Production Example 7) Conjugated Diene Polymer 7)

Using an autoclave with an internal volume of 10 L, provided with a stirrer and a jacket, and capable of controlling the temperature as a reactor, 690 g of 1,3-butadiene, 510 g of styrene, 5,600 g of cyclohexane, and 7.81 mmol of tetrahydrofuran (THF) and 1.045 mmol of potassium-t-amylalkoxide serving as polar materials, from which impurities were previously removed, were put in the reactor, and the reactor internal temperature was held at 56°C.

As a polymerization initiator, 5.23 mmol of n-butyllithium was supplied to the reactor.

After the polymerization reaction was initiated, the temperature in the reactor was increased by the heat generated by polymerization, and the reaction peak temperature was 77°C. To the polymer solution, 5.23 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 7.

The obtained conjugated diene polymer 7 was analyzed by the above method, and the analysis results are shown in Table 1.

((Production Example 8) Conjugated Diene Polymer 8)

Using an autoclave with an internal volume of 10 L, provided with a stirrer and a jacket, and capable of controlling the temperature as a reactor, 1140 g of 1,3-butadiene, 60 g of styrene, 5,600 g of cyclohexane, and 7.81 mmol of tetrahydrofuran (THF) and 5.465 mmol of 2,2-bis(2-oxolanyl)propane serving as polar materials, from which impurities were previously removed, were put in the reactor, and the reactor internal temperature was held at 48°C.

As a polymerization initiator, 13.27 mmol of n-butyllithium was supplied to the reactor.

After the polymerization reaction was initiated, the temperature in the reactor was increased by the heat generated by polymerization and reached the reaction temperature peak at 88°C, and 2.99 mmol of 1,3-bis(N,N'-diglycidyl aminomethyl)cyclohexane was then added as a coupling agent and stirred for 5 minutes. The coupling rate was 87.2%. To the polymer solution, 13.27 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 8.

The obtained conjugated diene polymer 8 was analyzed by the above method, and the analysis results are shown in Table 1.

((Production Example 9) Conjugated Diene Polymer 9)

Using an autoclave with an internal volume of 10 L, provided with a stirrer and a jacket, and capable of controlling the temperature as a reactor, 1,128 g of 1,3-butadiene, 72 g of styrene, 5,600 g of cyclohexane, and 7.81 mmol of tetrahydrofuran (THF) as a polar material, from which impurities were previously removed, were put in the reactor, and the reactor internal temperature was held at 56°C.

As a polymerization initiator, 21.35 mmol of n-butyllithium was supplied to the reactor.

After the polymerization reaction was initiated, the temperature in the reactor was increased by the heat generated by polymerization and reached the reaction temperature peak at 91°C, and 4.80 mmol of 1,3-bis(N,N'-diglycidyl aminomethyl)cyclohexane was then added as a coupling agent and stirred for 5 minutes. The coupling rate was 89.6%. To the polymer solution, 21.35 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 9.

The obtained conjugated diene polymer 9 was analyzed by the above method, and the analysis results are shown in Table 1.

((Production Example 10) Conjugated Diene Polymer 10)

Using an autoclave with an internal volume of 10 L, provided with a stirrer and a jacket, and capable of controlling the temperature as a reactor, 732 g of 1,3-butadiene, 468 g of styrene, 5,600 g of cyclohexane, 7.81 mmol of tetrahydrofuran (THF) and 0.742 mmol of 2,2-bis(2-oxolanyl)propane serving as polar materials, and 0.440 mmol of potassium-t-amylalkoxide, from which impurities were previously removed were put in the reactor, and the reactor internal temperature was held at 50°C.

As a polymerization initiator, 5.50 mmol of n-butyllithium was supplied to the reactor.

After the polymerization reaction was initiated, the temperature in the reactor was increased by the heat generated by polymerization, and the reaction peak temperature was 82°C. To the polymer solution, 5.50 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 10.

The obtained conjugated diene polymer 10 was analyzed by the above method, and the analysis results are shown in Table 1.

((Production Example 11) Conjugated Diene Polymer 11)

Using an autoclave with an internal volume of 10 L, provided with a stirrer and a jacket, and capable of controlling the temperature as a reactor, 574 g of 1,3-butadiene, 626 g of styrene, 5,600 g of cyclohexane, 7.81 mmol of tetrahydrofuran (THF) and 1.086 mmol of 2,2-bis(2-oxolanyl)propane serving as polar materials, and 0.646 mmol of potassium-t-amylalkoxide, from which impurities were previously removed, were put in the reactor, and the reactor internal temperature was held at 53°C.

As a polymerization initiator, 6.21 mmol of n-butyllithium was supplied to the reactor.

After the polymerization reaction was initiated, the temperature in the reactor was increased by the heat generated by polymerization, and the reaction peak temperature was 84°C. To the polymer solution, 6.21 mmol of ethanol was added as a reaction terminator.

To the obtained polymer solution, 4.4 g of n-octadecyl-3-(3,5-di-t-butyl-4-hydroxyphenyl)-propionate and 1.4 g of 4,6-bis(octylthiomethyl)-o-cresol were added as antioxidants, the conjugated diene polymer solution was then added dropwise to warm water to remove the solvent, and the resultant was subjected to drying treatment using a dryer to obtain a conjugated diene polymer 11.

The obtained conjugated diene polymer 11 was analyzed by the above method, and the analysis results are shown in Table 1.

[Table 1]

| | | | Conjugated diene polymer | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| | Content of bonded styrene | [% by mass] | 45.2 | 45.3 | 45.5 | 45.2 | 36.0 | 62.2 | 42 | 4.3 | 5.1 | 38.6 | 52.2 |
| | Content of styrene block | [% by mass] | 1.8 | 7.1 | 4.5 | 3.5 | 1.2 | 1.7 | 1.5 | 1.2 | 1.7 | 1.3 | 1.2 |
| | Amount of 1,2-vinyl bond in butadiene portion | [%] | 28.1 | 27.4 | 27.9 | 28.2 | 52.4 | 35 | 15.3 | 62.5 | 15 | 27.1 | 29 |

(continued)

| | | | Conjugated diene polymer | | | | | | | | | | |
|---|---|---|---|---|---|---|---|---|---|---|---|---|---|
| | | | 1 | 2 | 3 | 4 | 5 | 6 | 7 | 8 | 9 | 10 | 11 |
| Conjugated diene polymer | Mooney viscosity $ML_{1+4, 100°C}$ | [-] | 70.1 | 73.5 | 69.2 | 72.1 | 75.6 | 59 | 65 | 56 | 53 | 66.3 | 65.5 |
| | Non-coupling peak: peak top molecular weight | $\times 10^4$ [-] | 28.6 | 26.4 | 28.3 | 28.8 | 24.1 | 18.1 | 32.1 | 15.8 | 10.3 | 33.5 | 23.6 |
| | Coupling peak: peak top molecular weight | $\times 10^4$ [-] | - | - | - | - | 77.4 | - | - | 51.2 | 32.3 | - | - |
| | Weight average molecular weight | $\times 10^4$ [-] | 28.2 | 25.9 | 28.1 | 27.9 | 66.1 | 18.0 | 31.8 | 46.2 | 29.5 | 32.9 | 23 |
| | Coupling rate | [%] | - | - | - | - | 79.6 | - | - | 87.2 | 89.6 | - | - |
| | Modification rate | [%] | - | - | - | - | 79.8 | - | - | 88.1 | 89.4 | - | - |

[Production of Rubber Composition for Outsole and Outsole]

(Example 1)

A rubber composition for an outsole and an outsole were obtained according to the formulation shown below.

<Composition of Rubber Composition for Outsole>

Rubber component 1 (ASAPRENE 303 [manufactured by ASAHI KASEI CORPORATION]): 30.0 parts by mass

Rubber component 2 (BR1208 [manufactured by LG Chem Japan Co., Ltd.]): 70.0 parts by mass

Filler (REOLOSIL QS20 [manufactured by Tokuyama Corporation]): 30.0 parts by mass

Silane coupling agent (Dynasylan6498 [manufactured by Evonik Japan Co., Ltd.]): 2.0 parts by mass

Tackifier (ARKON M-100 [manufactured by Arakawa Chemical Industries, Ltd.]): 2.0 parts by mass

Antioxidant (NOCRAC SP [manufactured by OUCHI SHINKO CHEMICAL INDUSTRIAL CO., LTD.]): 0.5 parts by mass

Crosslinking agent (Park Mill D [manufactured by NOF CORPORATION])

Total: 134.5 parts by mass

The above materials were kneaded by the following method to obtain a rubber composition for an outsole and an outsole.
Using a Banbury Mixer (Labo Plastomill 10C100, B600 manufactured by Toyo Seiki Seisaku-sho, Ltd.) with an internal volume of 0.6 L, the rubber component 1 (ASAPRENE 303), the filler (REOLOSIL QS20), the silane coupling agent (Dynasylan6498), the tackifier (ARKON M-100), and the antioxidant (NOCRAC SP) were kneaded for 7 minutes under the conditions of a filling ratio of 65%, a rotational speed of the rotor of 35 rpm, and an initial set temperature of 95°C, as the kneading in the first stage, thereby obtaining a formulation in the first stage (a rubber composition for an outsole in the stage of containing no crosslinking agent).

Then, after the formulation was cooled, a crosslinking agent was added, and the mixture was kneaded with an open roll set to 35°C, as the kneading in the second stage, thereby obtaining a formulation (a rubber composition for an outsole in the stage of containing the crosslinking agent).

Finally, the formulation was crosslinked and molded using a heating press machine at 160°C and a pressure about 15 MPa for about 13 minutes to obtain a composition for an outsole after crosslinking, that is, a molded body corresponding to an outsole.

After crosslinking, the physical properties of the molded body corresponding to an outsole were measured.

The measurement results of the physical properties are shown in Table 2 below.

The ML viscosity of the formulation in the second stage and the physical properties of the molded body corresponding to an outsole after being crosslinked and molded as described above were measured by the following methods.

(Examples 2 to 23, Examples 54 to 57, and Comparative Examples 1 to 4)

Examples 2 to 23, Examples 54 to 57, and Comparative Examples 1 to 4 were obtained in the same manner as in Example 1, except that the materials formulated and composition ratio of the rubber composition for an outsole were changed as shown in Tables 2 to 4 below.

The materials formulated, the composition ratio, and the results of the physical properties are shown in Tables 2 to 4.

The rubber, tackifier, thermoplastic resin, and liquid rubber used in Examples 2 to 23, Examples 54 to 57, and Comparative Examples 1 to 4 are shown below.

<Rubber>

ASAPRENE 303 [manufactured by ASAHI KASEI CORPORATION]

Conjugated diene polymer 1

Conjugated diene polymer 2

Conjugated diene polymer 3

Conjugated diene polymer 4

Conjugated diene polymer 10

Conjugated diene polymer 11

BR1208 [manufactured by LG Chem Japan Co., Ltd.]

<Tackifier>

ARKON M-100 [manufactured by Arakawa Chemical Industries, Ltd.]

ESCOREZ 5600 [manufactured by Exxon Mobil Corporation]

YS RESIN TO115 [manufactured by YASUHARA CHEMICAL CO., LTD.]

Pine Crystal KE100 [manufactured by Arakawa Chemical Industries, Ltd.]

<Thermoplastic Resin>
Novatec LL [manufactured by Japan Polyethylene Corporation]
<Liquid Rubber>
LBR-302 [manufactured by KURARAY CO., LTD.]

[Evaluation of Physical Properties of Outsole]

((1) Compound ML)

Using the (crosslinking agent-containing) rubber composition for an outsole after the kneading in the second stage as the measurement sample, the measurement was performed in the same manner as the aforementioned method for measuring the Mooney viscosity.

((2) Type A Durometer Hardness)

The type A durometer hardness was measured using a sheet obtained by laminating two sheets of the outsole with 3.00 mm in thickness (6.00 mm in thickness in total) as the measurement sample in accordance with Japanese Industrial Standards JIS K6253-3. After a plunger was pressed on the sheet at a certain press force, the depth of settlement after 3 seconds was measured as the type A durometer hardness.

((3) HAZE value)

The HAZE value was measured in accordance with Japanese Industrial Standards JIS K7136 (or ISO 14782).
The outsole was formed into a sheet with 3.00 mm in thickness and measured using a haze meter (NDH 2000 manufactured by NIPPON DENSHOKU INDUSTRIES Co., Ltd.).

((4) Wear Resistance (Amount of Wear))

The wear resistance was measured by the DIN wear test in accordance with JIS K 6264 and evaluated by the index value.
Specifically, the wear volume of the outsoles of Examples and Comparative Examples was measured in the DIN wear test, and the wear resistance was determined based on the wear amount.

((5) Tensile Strength, Elongation)

The tensile strength and elongation of the outsoles of Examples and Comparative Examples were measured in accordance with Japanese Industrial Standards JIS K6251. These were evaluated by the index value.

((6) Grip Property (Coefficient of Dynamic Friction))

The coefficient of dynamic friction was measured with a friction wear tester (Heidon Tribo Gear Type 40) manufactured by Shinto Scientific Co., Ltd., and the grip properties were evaluated by the index value.
A sheet of an outsole with 3 mm in thickness, 30 mm in width, and 30 mm in length was brought into contact with the sliding surface, which was made of ceramic tile and in a lubricated state with water, and the sample was moved back and forth 10 times at a load of 500 gf, a sliding speed of 10 mm/minute, and a sliding distance of 80 mm.
At this time, the coefficients of dynamic friction of the forth movement of the sixth to tenth back and forth movement were averaged to determine grip properties.
These were evaluated by the index value.

[Table 2]

| Crosslinked rubber composition | | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|---|
| Formulated material and composition ratio (parts by mass) | Rubber | ASAPRENE 303 | 30 | 30 | 30 | - | - | 30 | 30 | - | - | - | 30 | 30 | 30 | 30 |
| | | Conjugated diene polymer 1 | - | - | - | 30 | 30 | - | - | 30 | 30 | 30 | - | - | - | - |
| | | Conjugated diene polymer 2 | - | - | - | - | - | - | - | - | - | - | - | - | - | - |
| | | Conjugated diene polymer 3 | - | - | - | - | - | - | - | - | - | - | - | - | - | - |
| | | Conjugated diene polymer 4 | - | - | - | - | - | - | - | - | - | - | - | - | - | - |
| | | BR1208 | 70 | 70 | 70 | 70 | 70 | 70 | 70 | 70 | 70 | 70 | 70 | 70 | 70 | 70 |
| | Filler | REOLOSIL QS20 | 30 | 30 | 30 | 30 | 30 | 30 | 30 | 30 | 30 | 30 | 30 | 30 | 30 | 30 |
| | Silane coupling agent | Dynasylan6498 | 2 | 2 | 2 | 2 | 2 | 2 | 2 | 2 | 2 | 2 | 2 | 2 | 2 | 2 |
| | Tackifier | ARKON M-100 | 2 | 10 | 25 | 10 | 25 | - | - | - | - | - | - | - | - | - |
| | | ESCOREZ5600 | - | - | - | - | - | 10 | 25 | 2 | 10 | 25 | - | - | - | - |
| | | YS RESIN TO115 | - | - | - | - | - | - | - | - | - | - | 10 | 25 | - | - |
| | | Pine Crystal KE100 | - | - | - | - | - | - | - | - | - | - | - | - | 10 | 25 |
| | Thermoplastic resin | Novatec LL | - | - | - | - | - | - | - | - | - | - | - | - | - | - |
| | Liquid rubber | LBR-302 | - | - | - | - | - | - | - | - | - | - | - | - | - | - |
| | Antioxidant | NOCRAC SP | 0.5 | 0.5 | 0.5 | 0.5 | 0.5 | 0.5 | 0.5 | 0.5 | 0.5 | 0.5 | 0.5 | 0.5 | 0.5 | 0.5 |
| | Crosslinking agent | Park Mill D | 0.6 | 0.6 | 0.6 | 0.6 | 0.6 | 0.6 | 0.6 | 0.6 | 0.6 | 0.6 | 0.6 | 0.6 | 0.6 | 0.6 |

(continued)

| Crosslinked rubber composition | | Example 1 | Example 2 | Example 3 | Example 4 | Example 5 | Example 6 | Example 7 | Example 8 | Example 9 | Example 10 | Example 11 | Example 12 | Example 13 | Example 14 |
|---|---|---|---|---|---|---|---|---|---|---|---|---|---|---|---|
| Physical property of formulation | Hardness | 68 | 65 | 60 | 63 | 57 | 64 | 58 | 65 | 61 | 56 | 66 | 61 | 64 | 60 |
| | HAZE value (%) | 24 | 24 | 23 | 24 | 25 | 24 | 22 | 25 | 24 | 23 | 25 | 27 | 26 | 25 |
| | Compound ML | 85 | 74 | 57 | 77 | 59 | 75 | 58 | 88 | 76 | 58 | 80 | 61 | 83 | 67 |
| | Coefficient of dynamic friction (index) | 104 | 118 | 130 | 113 | 130 | 116 | 132 | 106 | 116 | 126 | 112 | 124 | 108 | 117 |
| | Wear resistance (amount of wear) (index) | 101 | 104 | 112 | 90 | 104 | 102 | 115 | 84 | 85 | 103 | 106 | 119 | 110 | 123 |
| | Tensile strength (index) | 99 | 98 | 76 | 93 | 73 | 89 | 73 | 93 | 92 | 76 | 87 | 75 | 91 | 77 |
| | Elongation (index) | 103 | 114 | 121 | 110 | 117 | 107 | 120 | 106 | 113 | 123 | 106 | 117 | 105 | 113 |

[Table 3]

| Crosslinked rubber composition | | | Example 15 | Example 16 | Example 17 | Example 18 | Example 19 | Example 20 | Example 21 | Example 22 | Example 23 | Example 54 | Example 55 | Example 56 | Example 57 |
|---|---|---|---|---|---|---|---|---|---|---|---|---|---|---|---|
| Formulated material and composition ratio (parts by mass) | Rubber | ASAPRENE 303 | - | - | - | - | - | - | - | - | - | - | - | - | - |
| | | Conjugated diene polymer 1 | 20 | 40 | 30 | 30 | - | - | - | 30 | 30 | 30 | 30 | - | - |
| | | Conjugated diene polymer 2 | - | - | - | - | 30 | - | - | - | - | - | - | - | - |
| | | Conjugated diene polymer 3 | - | - | - | - | - | 30 | - | - | - | - | - | - | - |
| | | Conjugated diene polymer 4 | - | - | - | - | - | - | 30 | - | - | - | - | - | - |
| | | Conjugated diene polymer 10 | | | - | - | - | - | - | - | - | - | - | 30 | - |
| | | Conjugated diene polymer 11 | - | - | - | - | - | - | - | - | - | - | - | - | 30 |
| | | BR1208 | 80 | 60 | 70 | 70 | 70 | 70 | 70 | 70 | 70 | 70 | 70 | 70 | 70 |
| | Filler | REOLOSIL QS20 | 30 | 30 | 20 | 35 | 30 | 30 | 30 | 30 | 30 | 30 | 30 | 30 | 30 |
| | Silane coupling agent | Dynasylan6498 | 2 | 2 | 2 | 2 | 2 | 2 | 2 | 2 | 2 | 2 | 2 | 2 | 2 |
| | Tackifier | ARKON M-100 | - | - | - | - | - | - | - | - | - | - | - | - | - |
| | | ESCOREZ5600 | 10 | 10 | 10 | 10 | 10 | 10 | 10 | 0.5 | 1.5 | 5 | 15 | 10 | 10 |
| | | YS RESIN TO115 | - | - | - | - | - | - | - | - | - | - | - | - | - |
| | | Pine Crystal KE100 | - | - | - | - | - | - | - | - | - | - | - | - | - |
| | Thermoplastic resin | Novatec LL | - | - | - | - | - | - | - | - | - | - | - | - | - |
| | Liquid rubber | LBR-302 | - | - | - | - | - | - | - | - | - | - | - | - | - |
| | Antioxidant | NOCRAC SP | 0.5 | 0.5 | 0.5 | 0.5 | 0.5 | 0.5 | 0.5 | 0.5 | 0.5 | 0.5 | 0.5 | 0.5 | 0.5 |
| | Crosslinking agent | Park Mill D | 0.6 | 0.6 | 0.6 | 0.6 | 0.6 | 0.6 | 0.6 | 0.6 | 0.6 | 0.6 | 0.6 | 0.6 | 0.6 |

EP 4 748 263 A1

(continued)

| Crosslinked rubber composition | | Example 15 | Example 16 | Example 17 | Example 18 | Example 19 | Example 20 | Example 21 | Example 22 | Example 23 | Example 54 | Example 55 | Example 56 | Example 57 |
|---|---|---|---|---|---|---|---|---|---|---|---|---|---|---|
| Physical property of formulation | Hardness | 64 | 68 | 61 | 69 | 63 | 62 | 62 | 66 | 65 | 64 | 64 | 59 | 62 |
| | HAZE value (%) | 30 | 31 | 36 | 29 | 24 | 23 | 23 | 24 | 23 | 26 | 26 | 24 | 25 |
| | Compound ML | 88 | 97 | 68 | 82 | 75 | 75 | 76 | 92 | 90 | 85 | 85 | 73 | 85 |
| | Coefficient of dynamic friction (index) | 112 | 120 | 122 | 113 | 115 | 116 | 115 | 102 | 105 | 108 | 108 | 112 | 119 |
| | Wear resistance (amount of wear) (index) | 79 | 88 | 81 | 86 | 100 | 93 | 88 | 83 | 84 | 84 | 84 | 82 | 90 |
| | Tensile strength (index) | 95 | 101 | 86 | 96 | 88 | 93 | 89 | 99 | 97 | 92 | 92 | 87 | 95 |
| | Elongation (index) | 111 | 117 | 116 | 111 | 110 | 109 | 109 | 102 | 105 | 110 | 110 | 112 | 116 |

[Table 4]

| Crosslinked rubber composition | | | Comparative Example 1 | Comparative Example 2 | Comparative Example 3 | Comparative Example 4 |
|---|---|---|---|---|---|---|
| Formulated material and composition ratio (parts by mass) | Rubber | ASAPRENE 303 | 30 | - | 30 | 30 |
| | | Conjugated diene polymer 1 | - | - | - | - |
| | | Conjugated diene polymer 2 | | | | |
| | | Conjugated diene polymer 3 | | | | |
| | | Conjugated diene polymer 4 | | | | |
| | | BR1208 | 70 | 100 | 70 | 70 |
| | Filler | REOLOSIL QS20 | 30 | 30 | - | 30 |
| | Silane coupling agent | Dynasylan6498 | 2 | 2 | - | 2 |
| | Tackifier | ARKON M-100 | - | - | - | - |
| | | ESCOREZ5600 | - | - | - | - |
| | | YS RESIN TO115 | - | - | - | - |
| | | Pine Crystal KE100 | - | - | - | - |
| | Thermoplastic resin | Novatec LL | - | - | - | 5 |
| | Liquid rubber | LBR-302 | - | - | - | - |
| | Antioxidant | NOCRAC SP | 0.5 | 0.5 | 0.5 | 0.5 |
| | Crosslinking agent | Park Mill D | 0.6 | 0.6 | 0.6 | 0.6 |
| Physical property of formulation | Hardness | | 69 | 61 | 42 | 70 |
| | HAZE value (%) | | 23 | 65 | 85 | 81 |
| | Compound ML | | 89 | 76 | 55 | 90 |
| | Coefficient of dynamic friction (index) | | 100 | 74 | 120 | 96 |
| | Wear resistance (amount of wear) (index) | | 100 | 75 | 68 | 106 |
| | Tensile strength (index) | | 100 | 113 | 31 | 98 |
| | Elongation (index) | | 100 | 109 | 108 | 99 |

With respect to the evaluations of Examples shown in Table 2 to 4, the composition was intended for sports shoes application. The evaluation of practically sufficient criteria was set such that grip properties (coefficient of dynamic friction) were 85 or more, wear resistance (amount of wear) was 140 or less, tensile strength was 60 or more, and elongation was 70 or more.

The outsoles of Examples 1 to 23 and Examples 54 to 57 were found to have practically sufficient processability and excellent strength, wear resistance, and grip properties as compared with those of the outsoles of Comparative Examples 1 to 4.

[Production of Rubber Composition for Outsole and Outsole]

(Example 24)

A rubber composition for an outsole and an outsole were obtained according to the formulation shown below.

<Composition of Rubber Composition for Outsole>

Rubber component 1 (conjugated diene polymer 5): 30.0 parts by mass

Rubber component 2 (UBEPOL BR150 [manufactured by UBE Elastomer Co. Ltd.]): 60.0 parts by mass

Rubber component 3 (Nipol IR2200 [manufactured by Zeon Corporation]): 10.0 parts by mass

Filler (Ultrasil VN3 [manufactured by Evonik Japan Co., Ltd.]): 40.0 parts by mass

Silane coupling agent (Si69 [manufactured by Evonik Japan Co., Ltd.]): 2.0 parts by mass

Tackifier (ARKON M-100 [manufactured by Arakawa Chemical Industries, Ltd.]): 2.0 parts by mass

Antioxidant (NOCRAC 6C [manufactured by OUCHI SHINKO CHEMICAL INDUSTRIAL CO., LTD.]): 1.0 part by mass

Vulcanizing aid (zinc white): 3.0 parts by mass

Vulcanizing aid (stearic acid): 2.0 parts by mass

Sulfur: 1.4 parts by mass

Vulcanizing accelerator (MBT): 1.0 part by mass

Vulcanizing accelerator (TBBS): 1.0 part by mass

Total: 153.0 parts by mass

The above materials were kneaded by the following method to obtain a rubber composition for an outsole and an outsole.

Using a Banbury Mixer (Labo Plastomill10C100, B600 manufactured by Toyo Seiki Seisaku-sho, Ltd.) with an internal volume of 0.6 L, the rubber component 1 (conjugated diene polymer 5), the rubber component 2 (UBEPOL BR150), the rubber component 3 (Nipol IR2200), the filler (Ultrasil VN3), the silane coupling agent (Si69), the tackifier (ARKON M-100), and the antioxidant (NOCRAC 6C) were kneaded for 7 minutes under the conditions of a filling ratio of 65%, a rotational speed of the rotor of 35 rpm, and an initial set temperature of 75°C, as the kneading in the first stage, thereby obtaining a formulation in the first stage (a rubber composition for an outsole in the stage of containing no crosslinking agent).

Then, after the formulation was cooled, a crosslinking agent was added, and the mixture was kneaded with an open roll set to 80°C, as the kneading in the second stage, thereby obtaining a formulation (a rubber composition for an outsole in the stage of containing the crosslinking agent).

Finally, the formulation was crosslinked and molded using a heating press machine at 160°C and a pressure about 15 MPa for about 13 minutes to obtain a rubber composition for an outsole after crosslinking.

The ML viscosity of the formulation in the second stage and the physical properties of the rubber composition for an outsole after being crosslinked and molded as described above were measured.

The measurement results of the physical properties are shown in Table 5.

(Examples 25 to 45, Comparative Examples 5 to 6)

Examples 25 to 45 and Comparative Examples 5 to 6 were obtained in the same manner as in Example 24, except that the materials formulated and composition ratio of the rubber composition for an outsole were changed as shown in Tables 5 to 7 below.

The materials formulated, the composition ratio, and the results of the physical properties are shown in Tables 5 to 7.

The rubber, tackifier, and plasticizer used in Examples 25 to 45 and Comparative Examples 5 to 6 are shown below.

<Rubber>

ASAPRENE Y031 [manufactured by ASAHI KASEI CORPORATION]
Conjugated diene polymer 5
Conjugated diene polymer 6
Conjugated diene polymer 7
Conjugated diene polymer 8
Conjugated diene polymer 9
UBEPOL BR150 [manufactured by UBE Elastomer Co. Ltd.]
Nipol IR2200 [manufactured by Zeon Corporation]

<Tackifier>

ARKON M-100 [manufactured by Arakawa Chemical Industries, Ltd.]
ESCOREZ 5600 [manufactured by Exxon Mobil Corporation]
YS RESIN TO115 [manufactured by YASUHARA CHEMICAL CO., LTD.]
TAMANOL 440 [manufactured by Arakawa Chemical Industries, Ltd.]
YS RESIN PX300N [manufactured by YASUHARA CHEMICAL CO., LTD.]
ARDYME R-95 [manufactured by Arakawa Chemical Industries, Ltd.]

<Plasticizer>
P-200 [manufactured by ENEOS Corporation]

With respect to the rubber compositions for an outsole and outsoles of Examples 24 to 45, Comparative Examples 5 to 6, the physical properties were evaluated in the same manner as in Example 1 mentioned above. The evaluation results are shown in Tables 5 to 7 below.
The number of Tg in the mixture of the conjugated diene polymer and the tackifier was measured and evaluated as follows.

[Number of Tg in Mixture of Conjugated Diene Polymer and Tackifier]

The number of Tg in the mixture of the conjugated diene polymer and the tackifier can be determined by carrying out the DSC measurement of the mixture in accordance with Japanese Industrial Standards JIS K6240.

[Table 5]

| Crosslinked rubber composition | | | Example 24 | Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|---|---|---|---|
| Formulated material and composition ratio (parts by mass) | Rubber | Conjugated diene polymer 5 | 30 | 30 | 30 | - | - | - | - | 30 | 30 | - | - | - |
| | | ASAPRENE Y031 | - | - | - | 30 | 30 | 30 | 30 | - | - | - | - | - |
| | | Conjugated diene polymer 6 | - | - | - | - | - | - | - | - | - | 30 | | - |
| | | Conjugated diene polymer 7 | - | - | - | - | - | - | - | - | - | - | 30 | - |
| | | Conjugated diene polymer 8 | - | - | - | - | - | - | - | - | - | - | - | 30 |
| | | Conjugated diene polymer 9 | - | - | - | - | - | - | - | - | - | - | - | - |
| | | UBEPOL BR150 | 60 | 60 | 60 | 60 | 60 | 60 | 60 | 60 | 60 | 60 | 60 | 60 |
| | | IR2200 | 10 | 10 | 10 | 10 | 10 | 10 | 10 | 10 | 10 | 10 | 10 | 10 |
| | Filler | VN3 | 40 | 40 | 40 | 40 | 40 | 40 | 40 | 40 | 40 | 40 | 40 | 40 |
| | Silane coupling agent | Si69 | 2 | 2 | 2 | 2 | 2 | 2 | 2 | 2 | 2 | 2 | 2 | 2 |
| | Tackifier | ARKON M-100 | 2 | 10 | 25 | 10 | 25 | - | - | - | - | - | - | - |
| | | ESCOREZ 5600 | - | - | - | - | - | 10 | 25 | - | - | 10 | 10 | 10 |
| | | YS RESIN TO115 | - | - | - | - | - | - | - | 10 | 25 | - | - | - |
| | | TAMANOL 440 | - | - | - | - | - | - | - | - | - | - | - | - |

34

EP 4 748 263 A1

| Crosslinked rubber composition | | | Example 24 | Example 25 | Example 26 | Example 27 | Example 28 | Example 29 | Example 30 | Example 31 | Example 32 | Example 33 | Example 34 | Example 35 |
|---|---|---|---|---|---|---|---|---|---|---|---|---|---|---|
| | | YS RESIN PX300N | - | - | - | - | - | - | - | - | - | - | - | - |
| | | ARDYME R-95 | | | | | | - | - | - | - | - | - | - | - |
| | Plasticizer | P-200 | - | - | - | - | - | - | - | - | - | - | - | - |
| | Antioxidant | NOCRAC 6C | 1 | 1 | 1 | 1 | 1 | 1 | 1 | 1 | 1 | 1 | 1 | 1 |
| | Vulcanizing aid | Zinc white | 3 | 3 | 3 | 3 | 3 | 3 | 3 | 3 | 3 | 3 | 3 | 3 |
| | Vulcanizing aid | Stearic acid | 2 | 2 | 2 | 2 | 2 | 2 | 2 | 2 | 2 | 2 | 2 | 2 |
| | Vulcanizing agent | Sulfur | 1.4 | 1.4 | 1.4 | 1.4 | 1.4 | 1.4 | 1.4 | 1.4 | 1.4 | 1.4 | 1.4 | 1.4 |
| | Vulcanizing accelerator | MBT | 1 | 1 | 1 | 1 | 1 | 1 | 1 | 1 | 1 | 1 | 1 | 1 |
| | Vulcanizing accelerator | TBBS | 1 | 1 | 1 | 1 | 1 | 1 | 1 | 1 | 1 | 1 | 1 | 1 |
| | Number of Tg of mixture of conjugated diene polymer and tackifier | | 1 | 1 | 1 | 1 | 1 | 1 | 1 | 1 | 1 | 1 | 1 | 1 |
| Physical property of formulation | Hardness | | 62 | 61 | 59 | 55 | 51 | 54 | 51 | 59 | 58 | 58 | 56 | 52 |
| | Compound ML | | 131 | 118 | 89 | 116 | 91 | 113 | 88 | 121 | 94 | 132 | 118 | 110 |
| | Coefficient of dynamic friction (index) | | 105 | 111 | 127 | 106 | 112 | 106 | 117 | 107 | 118 | 112 | 107 | 103 |
| | Wear resistance (amount of wear) (index) | | 101 | 103 | 117 | 86 | 102 | 88 | 108 | 106 | 122 | 121 | 91 | 88 |
| | Tensile strength (index) | | 97 | 90 | 85 | 82 | 68 | 80 | 68 | 92 | 82 | 109 | 85 | 75 |
| | Elongation (index) | | 104 | 106 | 138 | 110 | 120 | 107 | 124 | 105 | 119 | 87 | 110 | 112 |

EP 4 748 263 A1

35

[Table 6]

EP 4 748 263 A1

| Crosslinked rubber composition | | | Example 36 | Example 37 | Example 38 | Example 39 | Example 40 | Example 41 | Example 42 | Example 43 | Example 44 | Example 45 |
|---|---|---|---|---|---|---|---|---|---|---|---|---|
| Formulated material and composition ratio (parts by mass) | Rubber | Conjugated diene polymer 5 | 30 | 30 | 30 | 30 | - | - | - | 15 | 25 | 65 |
| | | ASAPRENE Y031 | - | - | - | - | - | - | - | - | - | - |
| | | Conjugated diene polymer 6 | - | - | - | - | - | - | - | - | - | - |
| | | Conjugated diene polymer 7 | - | - | - | - | - | - | - | - | - | - |
| | | Conjugated diene polymer 8 | - | - | - | - | - | - | - | - | - | - |
| | | Conjugated diene polymer 9 | - | - | - | - | 30 | 30 | - | - | - | - |
| | | UBEPOL BR150 | 60 | 60 | 60 | 60 | 60 | 60 | 100 | 85 | 75 | 35 |
| | | IR2200 | 10 | 10 | 10 | 10 | 10 | 10 | - | 10 | 10 | 10 |
| | Filler | VN3 | 10 | 40 | 40 | 40 | 40 | 40 | 40 | 40 | 40 | 40 |
| | Silane coupling agent | Si69 | 0.5 | 2 | 2 | 2 | 2 | 2 | 2 | 2 | 2 | 2 |
| | Tackifier | ARKON M-100 | - | - | - | - | - | - | - | 10 | 10 | 10 |
| | | ESCOREZ 5600 | 10 | - | - | - | - | 10 | 10 | - | - | - |
| | | YS RESIN TO115 | - | - | - | - | 10 | - | - | - | - | - |
| | | TAMANOL 440 | - | 10 | - | - | - | - | - | - | - | - |
| | | YS RESIN PX300N | - | - | 10 | - | - | - | - | - | - | - |
| | | ARDYME R-95 | - | - | - | 10 | - | - | - | - | - | - |
| | Plasticizer | P-200 | - | - | - | - | - | - | - | - | - | - |
| | Antioxidant | NOCRAC 6C | 1 | 1 | 1 | 1 | 1 | 1 | 1 | 1 | 1 | 1 |
| | Vulcanizing aid | Zinc white | 3 | 3 | 3 | 3 | 3 | 3 | 3 | 3 | 3 | 3 |
| | Vulcanizing aid | Stearic acid | 2 | 2 | 2 | 2 | 2 | 2 | 2 | 2 | 2 | 2 |

(continued)

| Crosslinked rubber composition | | | Example 36 | Example 37 | Example 38 | Example 39 | Example 40 | Example 41 | Example 42 | Example 43 | Example 44 | Example 45 |
|---|---|---|---|---|---|---|---|---|---|---|---|---|
| | Vulcanizing agent | Sulfur | 1.4 | 1.4 | 1.4 | 1.4 | 1.4 | 1.4 | 1.4 | 1.4 | 1.4 | 1.4 |
| | Vulcanizing accelerator | MBT | 1 | 1 | 1 | 1 | 1 | 1 | 1 | 1 | 1 | 1 |
| | Vulcanizing accelerator | TBBS | 1 | 1 | 1 | 1 | 1 | 1 | 1 | 1 | 1 | 1 |
| | Number of Tg of mixture of conjugated diene polymer and tackifier | | 1 | 1 | 1 | 2 | 1 | 1 | 1 | 1 | 1 | 1 |
| Physical property of formulation | Hardness | | 51 | 62 | 57 | 61 | 62 | 61 | 51 | 55 | 59 | 63 |
| | Compound ML | | 78 | 128 | 112 | 130 | 126 | 124 | 131 | 128 | 120 | 109 |
| | Coefficient of dynamic friction (index) | | 121 | 108 | 111 | 103 | 104 | 103 | 101 | 104 | 109 | 128 |
| | Wear resistance (amount of wear) (index) | | 87 | 94 | 100 | 104 | 102 | 104 | 92 | 97 | 101 | 118 |
| | Tensile strength (index) | | 69 | 94 | 78 | 96 | 96 | 77 | 66 | 77 | 87 | 98 |
| | Elongation (index) | | 103 | 102 | 113 | 104 | 108 | 109 | 103 | 107 | 104 | 110 |

[Table 7]

| Crosslinked rubber composition | | | Comparative Example 5 | Comparative Example 6 |
|---|---|---|---|---|
| Formulated material and composition ratio (parts by mass) | Rubber | Conjugated diene polymer 5 | 30 | 30 |
| | | ASAPRENE Y031 | - | - |
| | | Conjugated diene polymer 6 | - | - |
| | | Conjugated diene polymer 7 | - | - |
| | | Conjugated diene polymer 8 | - | - |
| | | Conjugated diene polymer 9 | - | - |
| | | UBEPOL BR150 | 60 | 60 |
| | | IR2200 | 10 | 10 |
| | Filler | VN3 | 40 | 40 |
| | Silane coupling agent | Si69 | 2 | 2 |
| | Tackifier | ARKON M-100 | - | - |
| | | ESCOREZ 5600 | - | - |
| | | YS RESIN TO115 | - | - |
| | | TAMANOL 440 | - | - |
| | | YS RESIN PX300N | - | - |
| | | ARDYME R-95 | - | - |
| | Plasticizer | P-200 | - | 15 |
| | Antioxidant | NOCRAC 6C | 1 | 1 |
| | Vulcanizing aid | Zinc white | 3 | 3 |
| | Vulcanizing aid | Stearic acid | 2 | 2 |
| | Vulcanizing agent | Sulfur | 1.4 | 1.4 |
| | Vulcanizing accelerator | MBT | 1 | 1 |
| | Vulcanizing accelerator | TBBS | 1 | 1 |
| | | Number of Tg of mixture of conjugated diene polymer and tackifier | 0 | 0 |
| Physical property of formulation | | Hardness | 63 | 55 |
| | | Compound ML | 133 | 121 |
| | | Coefficient of dynamic friction (index) | 100 | 100 |
| | | Wear resistance (amount of wear) (index) | 100 | 110 |
| | | Tensile strength (index) | 100 | 56 |
| | | Elongation (index) | 100 | 104 |

With respect to the evaluations of Examples shown in Table 5 to 7, the composition was intended for walking application. The evaluation of practically sufficient criteria was set such that grip properties (coefficient of dynamic friction) were 80 or more, wear resistance (amount of wear) was 135 or less, tensile strength was 63 or more, and elongation was 80 or more.

The rubber compositions for an outsole of Examples 24 to 45 were found to have practically sufficient processability and excellent strength, wear resistance, and grip properties as compared with those of the rubber compositions for an outsole of Comparative Examples 5 to 6.

[Production of Rubber Composition for Outsole and Outsole]

(Example 46)

A rubber composition for an outsole and an outsole were obtained according to the formulation shown below.

<Composition of Rubber Composition for Outsole>

Rubber component 1 (conjugated diene polymer 5): 100.0 parts by mass

Filler (Ultrasil VN3 [manufactured by Evonik Japan Co., Ltd.]): 40.0 parts by mass

Silane coupling agent (Si69 [manufactured by Evonik Japan Co., Ltd.]): 2.0 parts by mass

Tackifier (ARKON M-100 [manufactured by Arakawa Chemical Industries, Ltd.]): 2.0 parts by mass

Antioxidant (NOCRAC 6C [manufactured by OUCHI SHINKO CHEMICAL INDUSTRIAL CO., LTD.]): 1.0 part by mass

Vulcanizing aid (zinc white): 3.0 parts by mass

Vulcanizing aid (stearic acid): 2.0 parts by mass

Sulfur: 1.4 parts by mass

Vulcanizing accelerator (MBT): 1.0 part by mass

Vulcanizing accelerator (TBBS): 1.0 part by mass

Total: 153.0 parts by mass

The above materials were kneaded by the following method to obtain a rubber composition for an outsole and an outsole.
Using a Banbury Mixer (Labo Plastomill10C100, B600 manufactured by Toyo Seiki Seisaku-sho, Ltd.) with an internal volume of 0.6 **L,** the rubber component 1 (conjugated diene polymer 5), the filler (Ultrasil VN3), the silane coupling agent (Si69), the tackifier (ARKON M-100), and the antioxidant (NOCRAC 6C) were kneaded for 7 minutes under the conditions of a filling ratio of 65%, a rotational speed of the rotor of 35 rpm, and an initial set temperature of 75°C, as the kneading in the first stage, thereby obtaining a formulation in the first stage (a rubber composition for an outsole in the stage of containing no crosslinking agent).
Then, after the formulation was cooled, a crosslinking agent was added, and the mixture was kneaded with an open roll set to 80°C, as the kneading in the second stage, thereby obtaining a formulation (a rubber composition for an outsole in the stage of containing the crosslinking agent).
Finally, the formulation was crosslinked and molded using a heating press machine at 160°C and a pressure about 15 MPa for about 13 minutes to obtain a rubber composition for an outsole.
The ML viscosity of the formulation in the second stage and the physical properties of the rubber composition for an outsole after being crosslinked and molded as described above were measured.
The measurement results of the physical properties are shown in Table 8.

(Examples 47 to 50, Comparative Examples 7 to 8)

Examples 47 to 50 and Comparative Example 7 to 8 were obtained in the same manner as in Example 46, except that the materials formulated and composition ratio of the rubber composition for an outsole were changed as shown in Table 8.

The materials formulated, the composition ratio, and the results of the physical properties are shown in Table 8.

The rubber, tackifier, and plasticizer used in Examples 47 to 50 and Comparative Examples 7 to 8 are shown below.

<Rubber>

Conjugated diene polymer 5

ASAPRENE Y031 [manufactured by ASAHI KASEI CORPORATION]

<Tackifier>
ARKON M-100 [manufactured by Arakawa Chemical Industries, Ltd.]

<Plasticizer>
P-200 [manufactured by ENEOS Corporation]

With respect to the rubber compositions for an outsole and outsoles of Examples 46 to 50 and Comparative Examples 7 to 8, the physical properties were evaluated in the same manner as in Example 1 mentioned above. The evaluation results are shown in Table 8 below.

[Table 8]

| | | | Example 46 | Example 47 | Example 48 | Example 49 | Example 50 | Comparative Example 7 | Comparative Example 8 |
|---|---|---|---|---|---|---|---|---|---|
| Crosslinked rubber composition | Formulated material and composition ratio (parts by mass) | Rubber | Conjugated diene polymer 5 | 100 | 100 | 100 | - | - | 100 | 100 |
| | | | ASAPRENE Y031 | - | - | - | 100 | 100 | - | - |
| | | | UBEPOL BR150 | - | - | - | - | - | - | - |
| | | | IR2200 | - | - | - | - | - | - | - |
| | | Filler | VN3 | 40 | 40 | 40 | 40 | 40 | 40 | 40 |
| | | Silane coupling agent | Si69 | 2 | 2 | 2 | 2 | 2 | 2 | 2 |
| | | Tackifier | ARKON M-100 | 2 | 10 | 25 | 10 | 25 | - | - |
| | | | ESCOREZ 5600 | - | - | - | - | - | - | - |
| | | | YS RESIN TO115 | - | - | - | - | - | - | - |
| | | Plasticizer | P-200 | - | - | - | - | - | - | 10 |
| | | Antioxidant | NOCRAC 6C | 1 | 1 | 1 | 1 | 1 | 1 | 1 |
| | | Vulcanizing aid | Zinc white | 3 | 3 | 3 | 3 | 3 | 3 | 3 |
| | | Vulcanizing aid | Stearic acid | 2 | 2 | 2 | 2 | 2 | 2.0 | 2.0 |
| | | Vulcanizing agent | Sulfur | 1.4 | 1.4 | 1.4 | 1.4 | 1.4 | 1.4 | 1.4 |
| | | Vulcanizing accelerator | MBT | 1 | 1 | 1 | 1 | 1 | 1.0 | 1.0 |
| | | Vulcanizing accelerator | TBBS | 1 | 1 | 1 | 1 | 1 | 1.0 | 1.0 |
| | Physical property of formulation | | Hardness | 64 | 64 | 62 | 57 | 53 | 64 | 60 |
| | | | Compound ML | 114 | 99 | 76 | 95 | 78 | 117 | 95 |
| | | | Coefficient of dynamic friction (index) | 102 | 110 | 114 | 103 | 107 | 100 | 102 |
| | | | Wear resistance (amount of wear) (index) | 100 | 101 | 103 | 82 | 84 | 100 | 107 |
| | | | Tensile strength (index) | 97 | 88 | 86 | 83 | 78 | 100 | 71 |
| | | | Elongation (index) | 105 | 106 | 141 | 113 | 124 | 100 | 107 |

With respect to the evaluations of Examples shown in Table 8, the composition was intended for trekking shoes application. The evaluation of practically sufficient criteria was set such that grip properties (coefficient of dynamic friction) were 90 or more, wear resistance (amount of wear) was 140 or less, tensile strength was 75 or more, and elongation was 80 or more.

The rubber compositions for an outsole obtained in Examples 46 to 50 were found to have practically sufficient processability and excellent strength, wear resistance, and grip properties as compared with those of the rubber compositions for an outsole of Comparative Examples 7 to 8.

[Production of Rubber Composition for Outsole and Outsole]

(Example 51)

A rubber composition for an outsole and an outsole were obtained according to the formulation shown below.

<Composition of Rubber Composition for Outsole>

Rubber component 1 (UBEPOL BR150 [manufactured by UBE Elastomer Co. Ltd.]): 70.0 parts by mass

Rubber component 2 (Nipol DN4050 [manufactured by Zeon Corporation]): 30.0 parts by mass

Filler (Ultrasil VN3 [manufactured by Evonik Japan Co., Ltd.]): 40.0 parts by mass

Silane coupling agent (Si69 [manufactured by Evonik Japan Co., Ltd.]): 2.0 parts by mass

Tackifier (ESCOREZ 5600 [manufactured by Exxon Mobil Corporation]): 10.0 parts by mass

Antioxidant (NOCRAC 6C [manufactured by OUCHI SHINKO CHEMICAL INDUSTRIAL CO., LTD.]): 1.0 part by mass

Vulcanizing aid (zinc white): 3.0 parts by mass

Vulcanizing aid (stearic acid): 2.0 parts by mass

Sulfur: 1.4 parts by mass

Vulcanizing accelerator (MBT): 1.0 part by mass

Vulcanizing accelerator (TBBS): 1.0 part by mass

Total: 153.0 parts by mass

The above materials were kneaded by the following method to obtain a rubber composition for an outsole and an outsole.

Using a Banbury Mixer (Labo Plastomill10C100, B600 manufactured by Toyo Seiki Seisaku-sho, Ltd.) with an internal volume of 0.6 L, the rubber component 1 (UBEPOL BR150), the rubber component 2 (Nipol DN4050), the filler (Ultrasil VN3), the silane coupling agent (Si69), the tackifier (ESCOREZ 5600), and the antioxidant (NOCRAC 6C) were kneaded for 7 minutes under the conditions of a filling ratio of 65%, a rotational speed of the rotor of 35 rpm, and an initial set temperature of 75°C, as the kneading in the first stage, thereby obtaining a formulation in the first stage (a rubber composition for an outsole in the stage of containing no crosslinking agent).

Then, after the formulation was cooled, a crosslinking agent was added, and the mixture was kneaded with an open roll set to 80°C, as the kneading in the second stage, thereby obtaining a formulation (a rubber composition for an outsole in the stage of containing the crosslinking agent).

Finally, the formulation was crosslinked and molded using a heating press machine at 160°C and a pressure about 15 MPa for about 13 minutes to obtain a rubber composition for an outsole.

The ML viscosity of the formulation in the second stage and the physical properties of the rubber composition for an outsole after being crosslinked and molded as described above were measured.

The measurement results of the physical properties are shown in Table 9.

(Examples 52 to 53, Comparative Example 9)

Examples 52 to 53 and Comparative Example 9 were obtained in the same manner as in Example 51, except that the materials formulated and composition ratio of the rubber composition for an outsole were changed as shown in Table 9.

The materials formulated, the composition ratio, and the results of the physical properties are shown in Table 9.

The rubber and tackifier used in Examples 52 to 53 and Comparative Example 9 are shown below.

    <Rubber>

    UBEPOL BR150 [manufactured by UBE Elastomer Co. Ltd.]

    ASAPRENE Y031 [manufactured by ASAHI KASEI CORPORATION]

    Nipol DN4050 [manufactured by Zeon Corporation]

    Bromobutyl 2244 [manufactured by Exxon Mobil Corporation]

    <Tackifier>
    ESCOREZ 5600 [manufactured by Exxon Mobil Corporation]

With respect to the rubber compositions for an outsole and outsoles of Examples 51 to 53 and Comparative Example 9, the physical properties were evaluated in the same manner as in Example 1 mentioned above. The evaluation results are shown in Table 9 below.

[Table 9]

| Crosslinked rubber composition | | | Example 51 | Example 52 | Example 53 | Comparative Example 9 |
|---|---|---|---|---|---|---|
| Formulated material and composition ratio (parts by mass) | Rubber | UBEPOL BR150 | 70 | 30 | 30 | 70 |
| | | ASAPRENE Y031 | - | - | 50 | - |
| | | Nipol DN4050 | 30 | 70 | - | 30 |
| | | Bromobutyl 2244 | - | - | 20 | - |
| | Filler | VN3 | 40 | 40 | 40 | 40 |
| | Silane coupling agent | Si69 | 2 | 2 | 2 | 2 |
| | Tackifier | ESCOREZ5600 | 10 | 10 | 10 | - |
| | Antioxidant | NOCRAC 6C | 1 | 1 | 1 | 1 |
| | Vulcanizing aid | Zinc white | 3 | 3 | 3 | 3 |
| | Vulcanizing aid | Stearic acid | 2 | 2 | 2 | 2.0 |
| | Vulcanizing agent | Sulfur | 1.4 | 1.4 | 1.4 | 1.4 |
| | Vulcanizing accelerator | MBT | 1 | 1 | 1 | 1.0 |
| | Vulcanizing accelerator | TBBS | 1 | 1 | 1 | 1.0 |

(continued)

| Crosslinked rubber composition | | Example 51 | Example 52 | Example 53 | Comparative Example 9 |
|---|---|---|---|---|---|
| Physical property of formulation | Hardness | 66 | 68 | 56 | 70 |
| | Compound ML | 71 | 67 | 90 | 88 |
| | Coefficient of dynamic friction (index) | 105 | 168 | 180 | 100 |
| | Wear resistance (amount of wear) (index) | 106 | 193 | 190 | 100 |
| | Tensile strength (index) | 111 | 135 | 82 | 100 |
| | Elongation (index) | 131 | 142 | 99 | 100 |

With respect to the evaluations of Examples shown in Table 9, the composition was intended for running shoes application. The evaluation of practically sufficient criteria was set such that grip properties (coefficient of dynamic friction) were 90 or more, wear resistance (amount of wear) was 210 or less, tensile strength was 78 or more, and elongation was 76 or more.

The rubber compositions for an outsole obtained in Examples 51 to 53 were found to have practically sufficient processability and excellent strength, wear resistance, and grip properties as compared with those of the rubber compositions for an outsole of Comparative Example 9.

This application claims priority to Japanese Patent application filed on July 18, 2023 (Japanese Patent Application No. 2023-116818), and the content of which is incorporated herein by reference.

**Industrial Applicability**

The rubber composition for an outsole of the present embodiment has industrial applicability as the material of sport shoes, walking shoes, and trekking shoes.

**Claims**

1. A rubber composition for an outsole, comprising:

   rubber;
   a filler; and
   a tackifier.

2. The rubber composition for the outsole according to claim 1, wherein the rubber composition contains a conjugated diene polymer as the rubber.

3. The rubber composition for the outsole according to claim 2, wherein the conjugated diene polymer contains an aromatic vinyl monomer unit and a conjugated diene monomer unit.

4. The rubber composition for the outsole according to claim 3, wherein the conjugated diene polymer has a content of the aromatic vinyl monomer unit of 10% by mass or more and 60% by mass or less and an amount of vinyl bonds of 20% or more and 70% or less.

5. The rubber composition for the outsole according to claim 3, wherein the conjugated diene polymer has a content of an aromatic vinyl monomer block of 5% by mass or less.

6. The rubber composition for the outsole according to claim 1, wherein a content of the filler is 15 parts by mass or more and 60 parts by mass or less based on 100 parts by mass of the rubber.

7. The rubber composition for the outsole according to claim 1, wherein the rubber composition contains 80% by mass or more of silica based on the total mass of the filler.

8. The rubber composition for the outsole according to claim 1, wherein a softening point of the tackifier is 40 to 170°C.

9. The rubber composition for the outsole according to claim 1, wherein a glass transition temperature of the tackifier is -20°C or more.

10. The rubber composition for the outsole according to claim 1, wherein the tackifier is a terpene compound and/or a petroleum hydrocarbon compound.

11. The rubber composition for the outsole according to claim 1, wherein a b* value of the tackifier is 50 or less.

12. The rubber composition for the outsole according to claim 10, wherein the petroleum hydrocarbon compound is an aromatic petroleum hydrocarbon resin or alkylphenol.

13. The rubber composition for the outsole according to claim 1, wherein a mixture of the rubber and the tackifier has only one Tg in differential scanning calorimetry (DSC).

14. The rubber composition for the outsole according to claim 2, wherein the tackifier is a terpene compound, and the conjugated diene polymer has a content of an aromatic vinyl monomer unit of 10% by mass or more and 50% by mass or less and an amount of vinyl bonds of 24% or more and 60% or less.

15. The rubber composition for the outsole according to claim 2, wherein the tackifier is a petroleum hydrocarbon compound, and the conjugated diene polymer has a content of an aromatic vinyl monomer unit of 20% by mass or more and 60% by mass or less and an amount of vinyl bonds of 20% or more and 55% or less.

16. The rubber composition for the outsole according to claim 1, wherein a difference in glass transition temperatures between the rubber and the tackifier is 10°C or more and 180°C or less.

17. The rubber composition for the outsole according to claim 1, wherein a content of the tackifier in the rubber composition for an outsole is 1 part by mass or more and 30 parts by mass or less based on 100 parts by mass of the rubber.

18. The rubber composition for the outsole according to claim 1, wherein a HAZE is 50% or less.

19. The rubber composition for the outsole according to claim 1, wherein the rubber composition contains, in the rubber, 10% by mass or more and less than 60% by mass of nitrile rubber as the rubber.

20. The rubber composition for the outsole according to claim 1, wherein the rubber composition contains, in the rubber, 10% by mass or more and 90% by mass or less of epichlorohydrin rubber as the rubber.

21. The rubber composition for the outsole according to claim 1, wherein the rubber composition contains, in the rubber, 10% by mass or more and 90% by mass or less of urethane rubber as the rubber.

22. The rubber composition for the outsole according to claim 1, wherein the rubber composition contains, in the rubber, 10% by mass or more and 90% by mass or less of chlorosulfonated ethylene rubber as the rubber.

23. The rubber composition for the outsole according to claim 1, wherein the rubber composition contains, in the rubber, 10% by mass or more and 90% by mass or less of acrylic rubber as the rubber.

24. The rubber composition for the outsole according to claim 1, wherein the rubber composition contains, in the rubber, 10% by mass or more and 90% by mass or less of silicone rubber as the rubber.

25. The rubber composition for the outsole according to claim 1, wherein the rubber composition contains, in the rubber, 10% by mass or more and 90% by mass or less of fluorine rubber as the rubber.

26. The rubber composition for the outsole according to claim 2, wherein the conjugated diene polymer contains polybutadiene and a styrene-butadiene copolymer.

27. An outsole as a molded body of the rubber composition for the outsole according to any one of claims 1 to 26.

## INTERNATIONAL SEARCH REPORT

| International application No. |
| --- |
| **PCT/JP2024/018565** |

| A. | CLASSIFICATION OF SUBJECT MATTER |
| --- | --- |

***A43B 13/12*** (2006.01)i; ***C08K 3/013*** (2018.01)i; ***C08K 3/36*** (2006.01)i; ***C08K 9/00*** (2006.01)i; ***C08K 9/06*** (2006.01)i;
***C08L 21/00*** (2006.01)i; ***C08L 91/00*** (2006.01)i; ***C08L 101/00*** (2006.01)i
FI: A43B13/12 A; C08K3/013; C08K9/00; C08K9/06; C08K3/36; C08L91/00; C08L101/00; C08L21/00

According to International Patent Classification (IPC) or to both national classification and IPC

| B. | FIELDS SEARCHED |
| --- | --- |

Minimum documentation searched (classification system followed by classification symbols)

A43B13/12; C08K3/013; C08K3/36; C08K9/00; C08K9/06; C08L21/00; C08L91/00; C08L101/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 110845785 A (WENZHOU YOULIAN NEW MATERIALS CO., LTD.) 28 February 2020 (2020-02-28)<br>paragraphs [0017]-[0182] | 1-27 |
| X | JP 63-8437 A (JAPAN ELASTOMER K.K.) 14 January 1988 (1988-01-14)<br>page 2, lower right column, line 9 to page 8, last line | 1-27 |
| A | WO 2015/151164 A1 (ASICS CORP.) 08 October 2015 (2015-10-08) | 1-27 |
| A | US 2022/0087360 A1 (GOODYEAR TIRE & RUBBER) 24 March 2022 (2022-03-24) | 1-27 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 July 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/018565**

| Patent document cited in search report | | | Publication date (day/month/year) | Patent family member(s) | | | Publication date (day/month/year) |
|---|---|---|---|---|---|---|---|
| CN | 110845785 | A | 28 February 2020 | (Family: none) | | | |
| JP | 63-8437 | A | 14 January 1988 | (Family: none) | | | |
| WO | 2015/151164 | A1 | 08 October 2015 | US | 2017/0013910 | A1 | |
| | | | | EP | 3127447 | A1 | |
| US | 2022/0087360 | A1 | 24 March 2022 | EP | 3973807 | A1 | |
| | | | | CN | 114196081 | A | |
| | | | | KR | 10-2022-0037972 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017549835 A
- JP 2015072532 A
- WO 2021206068 A
- JP 2023116818 A

**Non-patent literature cited in the description**

- **I. M. KOLTHOFF et al.** *J. Polym. Sci.*, 1946, vol. 1, 429